# EUROPEAN PATENT APPLICATION

(11) **EP 4 678 469 A1**
(43) Date of publication of application: **14.01.2026**
(21) Application number: 24766969.0
(22) Date of filing: 27.02.2024
(51) Int. Cl.: B60N 2/07

(54) **ELECTRIC SLIDE RAIL, VEHICLE SEAT EQUIPPED WITH ELECTRIC SLIDE RAIL, AND METHOD FOR MANUFACTURING ELECTRIC SLIDE RAIL**

(30) Priority: 03.03.2023 US 202363488327 P; 04.04.2023 US 202363494125 P; 26.02.2024 JP 2024026835; 26.02.2024 JP 2024026867
(71) Applicant: TS Tech Co., Ltd., Asaka-shi, Saitama 351-0012 (JP)
(72) Inventor: SCHRAND Justin, Reynoldsburg Ohio 43068 (US); VANDENHEEDE Dean, Reynoldsburg Ohio 43068 (US)
(74) Representative: Dehns
(86) International application number: PCT/JP2024/007142
(87) International publication number: WO 2024/185598

(57) **Abstract**

[TASK] To provide an electric slide rail device capable of suppressing variations in the contact position between the screw member and the engagement hole.

[SOLUTION] The electric slide rail device 1 comprises a rail 11, a slider 12, a screw assembly 35 including a screw member 38, an electric motor 36, and a screw engagement portion 57. The screw engagement portion includes a plurality of engagement holes 59 formed in each side wall and arranged in the first direction. Each engagement hole extends at an angle with respect to a second direction perpendicular to the first direction. Each engagement hole includes a first portion 61 located in a longitudinally central part thereof and a pair of second portions 62A and 62B located on either side of the first portion. The width of each second portion in the first direction is smaller than the width of the first portion in the first direction. The screw member does not abut against an edge portion 65 of the engagement hole in the first portion and abuts against the edge portion of the engagement hole in at least one of the second portions.

## Description

### TECHNICAL FIELD

The present invention relates to an electric slide rail device, a vehicle seat equipped with an electric slide rail device, and a manufacturing method for an electric slide rail device.

### BACKGROUND ART

Patent Document 1 discloses an electric slide rail device including a rail, a slider slidably supported on the rail, a screw member rotatably supported on the slider, and an electric motor for rotating the screw member. The rail is formed with a plurality of engagement holes for engaging with the screw member. As the screw member rotates, the screw member moves relative to the engagement holes, and the slider moves relative to the rail.

### PRIOR ART DOCUMENT(S)

### PATENT DOCUMENT(S)

Patent Document 1: WO2020/141600A1

### SUMMARY OF THE INVENTION

### TASK TO BE ACCOMPLISHED BY THE INVENTION

The contact position (engagement position) between the screw member and the engagement hole varies due to manufacturing errors and assembly errors. When the contact position between the screw member and the engagement hole varies, the driving force of the electric motor required to move the slider changes, making it difficult to move the slider with precision. In some cases, the slider may be readily moved in response to an external force input to the slider.

In view of the above background, a primary object of the present invention is to provide an electric slide rail device capable of suppressing variations in the contact position between the screw member and the engagement hole. Another object of the present invention is to provide a vehicle seat equipped with an electric slide rail device capable of suppressing variations in the contact position between the screw member and the engagement hole. Yet another object of the present invention is to provide a manufacturing method for an electric slide rail device capable of suppressing variations in the contact position between the screw member and the engagement hole.

### MEANS TO ACCOMPLISH THE TASK

In order to accomplish such a task, one aspect of the present invention provides an electric slide rail device (1), comprising: a rail (11) having a channel cross section and extending along a first direction; a slider (12) that is received in the rail and slidably engages with the rail; a screw assembly (35) including a screw member (38) supported on the slider so as to be rotatable about the first direction; an electric motor (36) that is supported on the slider and configured to rotate the screw member; and a screw engagement portion (57) that is formed on the rail so as to extend in the first direction and engage with the screw member, the rail having a pair of side walls (17) that oppose each other, wherein the screw engagement portion includes a plurality of engagement holes (59) formed in each side wall and arranged in the first direction, each engagement hole extending at an angle with respect to a second direction perpendicular to the first direction, and wherein each engagement hole includes a first portion (61) located in a longitudinally central part thereof and a pair of second portions (62A, 62B) located on either side of the first portion, the width of the second portion in the first direction being smaller than the width of the first portion in the first direction such that the screw member does not abut against an edge portion (65) of the engagement hole in the first portion, and abuts against the edge portion of the engagement hole in at least one of the second portions.

According to this aspect, the screw member does not contact the edge portion of the engagement hole in the first portion, and contacts the edge portion of the engagement hole in at least one of the second portions, so that the contact position between the screw member and the engagement hole is limited, thereby making it possible to provide an electric slide rail device that can suppress variations in the contact position between the screw member and the engagement hole.

In the above aspect, preferably, the screw member abuts against the edge portion in one of the second portions.

According to this aspect, the contact position between the screw member and the engagement hole is further limited, thereby making it possible to suppress variations in the contact position between the screw member and the engagement hole.

In the above aspect, preferably, the screw member abuts against the edge portion in one of the second portions on one side of the first direction.

According to this aspect, when the screw member presses the edge portion of the engagement hole, other portions of the screw member are prevented from coming into contact with the edge portion of the engagement hole.

In the above aspect, preferably, the edge portion of the engagement hole includes a step (65A) formed at a boundary between the first portion and the second portion.

According to this aspect, contact between the first portion and the screw member is prevented.

In the above aspect, preferably, a gap is defined between the screw member and an end edge portion (65G) that forms an end portion of the second portion of the edge portion in the second direction.

According to this aspect, contact between the screw member and the end edge portion is suppressed so that the generation of abnormal noise is suppressed, and the rotational resistance of the screw member is reduced.

In the above aspect, preferably, the end edge portion extends parallel to the first direction.

According to this aspect, the shape of the engagement hole can be simplified.

In the above aspect, preferably, the side walls are respectively provided with protrusion (22) that protrude toward each other and extend in the first direction, and the engagement holes are passed through the protrusions in the second direction.

According to this aspect, the rigidity of the side walls can be improved by the protrusions.

In the above aspect, preferably, one of the second portions is offset in the first direction relative to the other second portion.

According to this aspect, preferably, the screw member can be brought into contact with the second portion.

In the above aspect, preferably, the second portions have a same length in the second direction.

According to this aspect, the shape of the engagement hole can be simplified.

Another aspect of the present invention provides a vehicle seat having the above-mentioned electrically powered slide rail device, wherein the rail is connected to a floor of a vehicle, and the slider is connected to a seat cushion.

According to this aspect, it is possible to provide a vehicle seat equipped with an electric slide rail device that can suppress variations in the contact position between the screw member and the engagement hole.

Yet another aspect of the present invention provides a manufacturing method for an electric slide rail device (1), wherein the electric slide rail device (1) comprises: a rail (11) having a channel cross section and extending along a first direction; a slider (12) that is received in the rail and slidably engages with the rail; a screw assembly (35) including a screw member (38) supported on the slider so as to be rotatable about the first direction; an electric motor (36) that is supported on the slider and configured to rotate the screw member; and a screw engagement portion (57) that is formed on the rail so as to extend in the first direction and engage with the screw member, the rail having a pair of side walls (17) that oppose each other, wherein the screw engagement portion includes a plurality of engagement holes (59) formed in each side wall and arranged in the first direction, each engagement hole extending at an angle with respect to a second direction perpendicular to the first direction, and wherein each engagement hole includes a first portion (61) located in a longitudinally central part thereof and a pair of second portions (62A, 62B) located on either side of the first portion, the width of the second portion in the first direction being smaller than the width of the first portion in the first direction such that the screw member does not abut against an edge portion (65) of the engagement hole in the first portion, and abuts against the edge portion of the engagement hole in at least one of the second portions, the manufacturing method comprising the steps of forming the engagement holes in the rail, assembling the screw assembly and the electric motor to the slider, and assembling the slider, with the screw assembly and the electric motor assembled thereto, to the rail.

This aspect of the present invention provides a manufacturing method for an electric slide rail device that can suppress variations in the contact position between the screw member and the engagement hole.

Conventionally, slide rail devices connecting a seat main body such as a seat back or a seat cushion of a vehicle seat to a floor so as to be slidable relative to the floor are known in the art (for example, JPH1-99734U). This slide rail device includes a pair of lower rails fixed to the floor on either side, a pair of upper rails engaged to the respective lower rails for sliding movement and having a seat fixed to the upper surfaces thereof and an electric motor for sliding the upper rails.

A conventionally known slide rail device that allows a seat main body to slide is provided with a wire harness that is fixed at one end to the floor and linked to the upper rail at the other end (for example, JP2005-313662A). The slide rail device disclosed JP2005-313662A is provided with a winding device that winds and unwinds the wire harness in relation to the movement of the upper rail relative to the lower rail. A storage space for storing the wire harness is provided inside the winding device so that the wire harness is stored by being wound around a central shaft provided in the storage space at one end thereof.

As is the case with the winding device of JP2005-313662 A, the wire harness is held in a bent state and when the bending radius of the wire harness is small, there is a risk that an excessive load is applied to the wire harness.

In view of the above background, yet another aspect of the present invention provides a slide rail device and a method for manufacturing a slide rail device that can reduce the load that may be applied to a wire harness connected to an electrical component provided on a support member that is slidable.

A certain aspect of the present invention provides a slide rail device (1) for slidably coupling a support member (7) having electric equipment (67) mounted thereon relative to a floor (3), the slide rail device including a rail (11) mounted on the floor, a slider (12) slidably engaging with the rail and supporting the support member, a wire harness (202) connected to the electric equipment, and a tubular protector (212) connected to the slider and through which the wire harness is passed, the protector being configured to be bendable deformable to one side orthogonal to an extending direction thereof and to another side opposite to the one side, wherein the protector is provided with a plurality of slits (220) extending from the one side to the other side for limiting a bending radius of the protector when bent toward the one side to be equal to or greater than a predetermined threshold value (Rth).

According to this aspect, since the bending radius when the protector through which the wire harness is passed is bent to the one side is limited to be equal to or greater than a predetermined threshold value, the bending radius of the wire harness when bent to the one side can be limited so that the load that can be applied to the wire harness can be limited.

In the above aspect, preferably, the width of each slit increases toward the one side.

According to this aspect, the protector can be bent and deformed to the one side, and the bending radius when bent to the one side can be limited to be equal to or greater than a predetermined threshold value.

In the above aspect, preferably, each slit has a triangular shape when the protector is viewed from top.

According to this aspect, the protector can be bent and deformed to the one side, and the bending radius when bent to the one side can be limited to be equal to or greater than a predetermined threshold value.

In the above aspect, preferably, the slide rail device includes a storage case (203) defining a storage space (205) therein for storing the wire harness and a part of the protector and an inlet hole (206) communicating with the storage space and through which the wire harness and the protector are passed.

According to this aspect, the wire harness and the protector can be stored in the storage case.

In the above aspect, preferably, the protector is placed in the storage space so as to bend to the one side and the other side to form an S-shape, and a guide wall is provided in the storage space to guide an extending direction of the protector so as to bend to the other side.

According to this aspect, the wire harness and the protector can be stored in the storage space in a favorable manner, and the guide wall can limit the bending radius of the protector to the other side.

In the above aspect, preferably, the inlet hole of the storage case is connected to an end of the rail, and the protector and the wire harness protrude into an interior of the rail from the end of the rail.

According to this aspect, the protector and the wire harness can be stored within the rail.

In the above aspect, preferably, an outer surface of the protector is provided with a protrusion (224) protruding outward.

According to this aspect, the contact area between the protector and the rail can be reduced.

In the above aspect, preferably, the projection is a ridge extending along an extending direction of the protector.

According to this aspect, the contact area between the protector and the rail can be reduced in a particularly favorable manner.

In the above aspect, preferably, the protector is connected to the slider via a connecting member (240) which is provided with a through hole (265) for passing the wire harness therethrough, the through hole opens at a surface of the connecting member facing the support body, and the surface facing the support body is provided with a tubular portion (267) that surrounds an opening of the through hole.

According to this aspect, the extending direction of the wire harness can be guided toward the support body by the tubular portion.

In the above aspect, preferably, the support body includes a seat cushion (5) connected to the slider and a seat back (6) extending upward from a rear portion of the seat cushion.

According to this aspect, the seat main body including the seat cushion and the seat back can be slidably connected to the floor.

In order to accomplish the above-mentioned task, another aspect of the present invention provides a manufacturing method for a slide rail device (1) for slidably coupling a support body (7) provided with electric equipment (67) to a floor (3), the method including the steps of assembling a rail device (275) including a rail (11) and a slider (12) slidably supported on the rail to the floor, assembling the support body to the slider, and connecting a tubular protector (212) housing a wire harness (202) configured to be connected to the electric equipment therein to the slider, wherein the protector is configured to be bendable deformable to one side orthogonal to an extending direction thereof and to another side opposite to the one side and is provided with a plurality of slits (220) extending from the one side to the other side for limiting a bending radius of the protector when bent toward the one side to be equal to or greater than a predetermined threshold value (Rth).

According to this aspect, since the bending radius when the protector through which the wire harness is passed is bent to the one side is limited to be equal to or greater than a predetermined threshold value, the bending radius of the wire harness when bent to the one side can be limited so that the load that can be applied to the wire harness can be limited.

### EFFECT OF THE INVENTION

One aspect of the present invention provides an electric slide rail device (1), comprising: a rail (11) having a channel cross section and extending along a first direction; a slider (12) that is received in the rail and slidably engages with the rail; a screw assembly (35) including a screw member (38) supported on the slider so as to be rotatable about the first direction; an electric motor (36) that is supported on the slider and configured to rotate the screw member; and a screw engagement portion (57) that is formed on the rail so as to extend in the first direction and engage with the screw member, the rail having a pair of side walls (17) that oppose each other, wherein the screw engagement portion includes a plurality of engagement holes (59) formed in each side wall and arranged in the first direction, each engagement hole extending at an angle with respect to a second direction perpendicular to the first direction, and wherein each engagement hole includes a first portion (61) located in a longitudinally central part thereof and a pair of second portions (62A, 62B) located on either side of the first portion, the width of the second portion in the first direction being smaller than the width of the first portion in the first direction such that the screw member does not abut against an edge portion (65) of the engagement hole in the first portion, and abuts against the edge portion of the engagement hole in at least one of the second portions.

According to this aspect, the screw member does not contact the edge portion of the engagement hole in the first portion, and contacts the edge portion of the engagement hole in at least one of the second portions, so that the contact position between the screw member and the engagement hole is limited, thereby making it possible to provide an electric slide rail device that can suppress variations in the contact position between the screw member and the engagement hole.

In the above aspect, preferably, the screw member abuts against the edge portion in one of the second portions.

According to this aspect, the contact position between the screw member and the engagement hole is further limited, thereby making it possible to suppress variations in the contact position between the screw member and the engagement hole.

In the above aspect, preferably, the screw member abuts against the edge portion in one of the second portions on one side of the first direction.

According to this aspect, when the screw member presses the edge portion of the engagement hole, other portions of the screw member are prevented from coming into contact with the edge portion of the engagement hole.

In the above aspect, preferably, the edge portion of the engagement hole includes a step (65A) formed at a boundary between the first portion and the second portion.

According to this aspect, contact between the first portion and the screw member is prevented.

In the above aspect, preferably, a gap is defined between the screw member and an end edge portion (65G) that forms an end portion of the second portion of the edge portion in the second direction.

According to this aspect, contact between the screw member and the end edge portion is suppressed so that the generation of abnormal noise is suppressed, and the rotational resistance of the screw member is reduced.

In the above aspect, preferably, the end edge portion extends parallel to the first direction.

According to this aspect, the shape of the engagement hole can be simplified.

In the above aspect, preferably, the side walls are respectively provided with protrusion (22) that protrude toward each other and extend in the first direction, and the engagement holes are passed through the protrusions in the second direction.

According to this aspect, the rigidity of the side walls can be improved by the protrusions.

In the above aspect, preferably, one of the second portions is offset in the first direction relative to the other second portion.

According to this aspect, preferably, the screw member can be brought into contact with the second portion.

In the above aspect, preferably, the second portions have a same length in the second direction.

According to this aspect, the shape of the engagement hole can be simplified.

Another aspect of the present invention provides a vehicle seat having the above-mentioned electrically powered slide rail device, wherein the rail is connected to a floor of a vehicle, and the slider is connected to a seat cushion.

According to this aspect, it is possible to provide a vehicle seat equipped with an electric slide rail device that can suppress variations in the contact position between the screw member and the engagement hole.

Yet another aspect of the present invention provides a manufacturing method for an electric slide rail device (1), wherein the electric slide rail device (1) comprises: a rail (11) having a channel cross section and extending along a first direction; a slider (12) that is received in the rail and slidably engages with the rail; a screw assembly (35) including a screw member (38) supported on the slider so as to be rotatable about the first direction; an electric motor (36) that is supported on the slider and configured to rotate the screw member; and a screw engagement portion (57) that is formed on the rail so as to extend in the first direction and engage with the screw member, the rail having a pair of side walls (17) that oppose each other, wherein the screw engagement portion includes a plurality of engagement holes (59) formed in each side wall and arranged in the first direction, each engagement hole extending at an angle with respect to a second direction perpendicular to the first direction, and wherein each engagement hole includes a first portion (61) located in a longitudinally central part thereof and a pair of second portions (62A, 62B) located on either side of the first portion, the width of the second portion in the first direction being smaller than the width of the first portion in the first direction such that the screw member does not abut against an edge portion (65) of the engagement hole in the first portion, and abuts against the edge portion of the engagement hole in at least one of the second portions, the manufacturing method comprising the steps of forming the engagement holes in the rail, assembling the screw assembly and the electric motor to the slider, and assembling the slider, with the screw assembly and the electric motor assembled thereto, to the rail.

This aspect of the present invention provides a manufacturing method for an electric slide rail device that can suppress variations in the contact position between the screw member and the engagement hole.

### BRIEF DESCRIPTION OF THE DRAWINGS

[FIG. 1] An overall structure of a vehicle seat fitted with an electric slide rail device according to an embodiment of the present invention
[FIG. 2] A perspective view of the electric slide rail device
[FIG. 3] A sectional view of the electric slide rail device (taken along line II-II of FIG. 5)
[FIG. 4] A sectional view of a rail
[FIG. 5] A perspective view of a slider partly in section
[FIG. 6] A sectional view of the electric slide rail device
[FIG. 7] A perspective view of a screw assembly with a first bracket thereof omitted from illustration
[FIG. 8] A perspective view of the screw assembly with the first bracket and an outer case thereof omitted from illustration
[FIG. 9] A sectional view of an inner wall of a left rail as viewed from a left side
[FIG. 10] A sectional view of an outer wall of a right rail as viewed from a right side
[FIG. 11] A perspective view of a first screw member
[FIG. 12] A sectional view of a thread of the first screw member
[FIG. 13] A sectional view of an inner wall of a left rail as viewed from the left side
[FIG. 14] A sectional view of an outer wall of the right rail as viewed from the right side
[FIG. 15] A perspective view of an electric slide rail device including a wire managing device
[FIG. 16] An exploded perspective view of the wire managing device
[FIG. 17] A view taken along a horizontal plane to illustrate the structure of the wire managing device
[FIG. 18] A sectional view of a part of the rail of the first embodiment where the protector and wire harness are passed through (taken along line XVIII-XVIII of FIG. 17)
[FIG. 19] A perspective view of the protector and the harness of the first embodiment
[FIG. 20] (A) a top view of the protector when bent rightward, (B) a top view of the protector when bent leftward
[FIG. 21] A perspective view showing the mode of assembling the protector and the wire harness to a case upper member
[FIG. 22] A perspective view of a protector and a wire harness according to a second embodiment of the present invention
[FIG. 23] (A) a sectional view of the protector and the wire harness of the second embodiment, (B) an explanatory view of the protector and the wire harness of the second embodiment in the assembled state
[FIG. 24] A perspective view showing the mode of assembling the slider to a connecting member
[FIG. 25] A top view of a part joining the protector to the slider
[FIG. 26] An exploded perspective view of the connecting member
[FIG. 27] (A) a horizontal sectional view of the wire managing device, (B) a horizontal sectional view of the wire managing device when the slider has moved forward from the state shown in (A).

### DETAILED DESCRIPTION OF THE PREFERRED EMBODIMENT(S)

A preferred embodiment of the present invention will be described in the following with reference to the appended drawings. The electric slide rail device is provided with a rail and a slider that is slidable relative to the rail. The rail is connected to a first structure, and the slider is connected to a second structure. The electric slide rail device moves the second structure relative to the first structure as the slider moves relative to the rail. The electric slide rail device is provided, for example, between a floor and a seat of a vehicle, and moves the seat relative to the floor. In addition, the electric slide rail device may also be provided between a base and a work holder to move the work holder relative to the base.

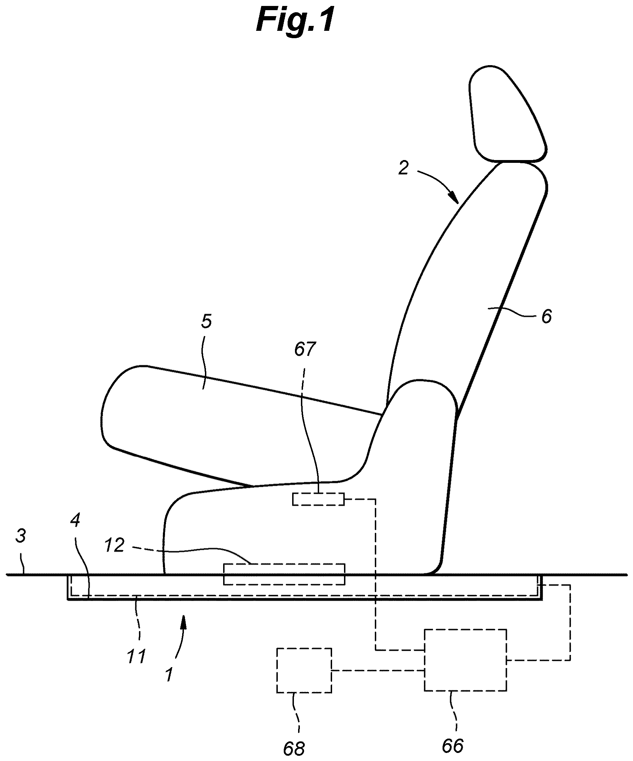

The following description will be directed to an electric slide rail device 1 and a vehicle seat 2 equipped with the electric slide rail device 1 of the present embodiment with reference to the appended drawings. As shown in Fig. 1, the vehicle seat 2 is provided with at least one electric slide rail device 1 on a lower part thereof and is connected to a floor 3 of a vehicle via the electric slide rail device 1. The vehicle seat 2 includes a seat cushion 5 that supports the buttocks of an occupant and a seat back 6 that extends upward from a rear part of the seat cushion 5 to support the back of the occupant. The electric slide rail device 1 is provided between the floor 3 and the seat cushion 5 and supports the seat cushion 5 so that it can slide relative to the floor 3. The vehicle seat 2 preferably has a pair of electric slide rail devices 1.

Hereinafter, the part of the vehicle seat 2 that slides relative to the floor 3 by means of the electric slide rail device 1 will be referred to as a seat main body 7. The seat main body 7 thus includes the seat cushion 5 and the seat back 6. The seat main body 7 may further include a headrest provided on an upper part of the seat back 6 and an ottoman provided in front of the seat cushion 5.

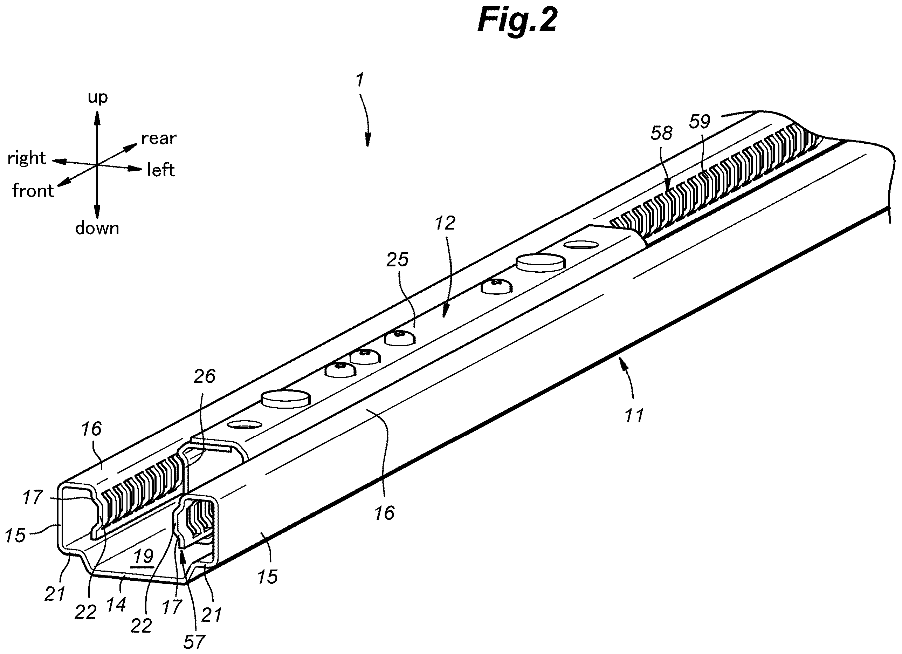

As shown in FIG. 2, the electric slide rail device 1 includes a rail 11 extending in the fore and aft direction and a slider 12 slidably engaged with the rail 11. The extending direction of the rail 11 is defined as the fore and aft direction. The extending direction of the rail 11 may or may not be the fore and aft direction of the vehicle. In other words, the extending direction of the rail 11 does not limit the mounting direction thereof on the vehicle. In this embodiment, the extending direction of the rail 11 coincides with the fore and aft direction of the vehicle. In this embodiment, the slider 12 is provided on top of the rail 11. Therefore, the rail 11 may be called a lower rail, and the slider 12 may be called an upper rail.

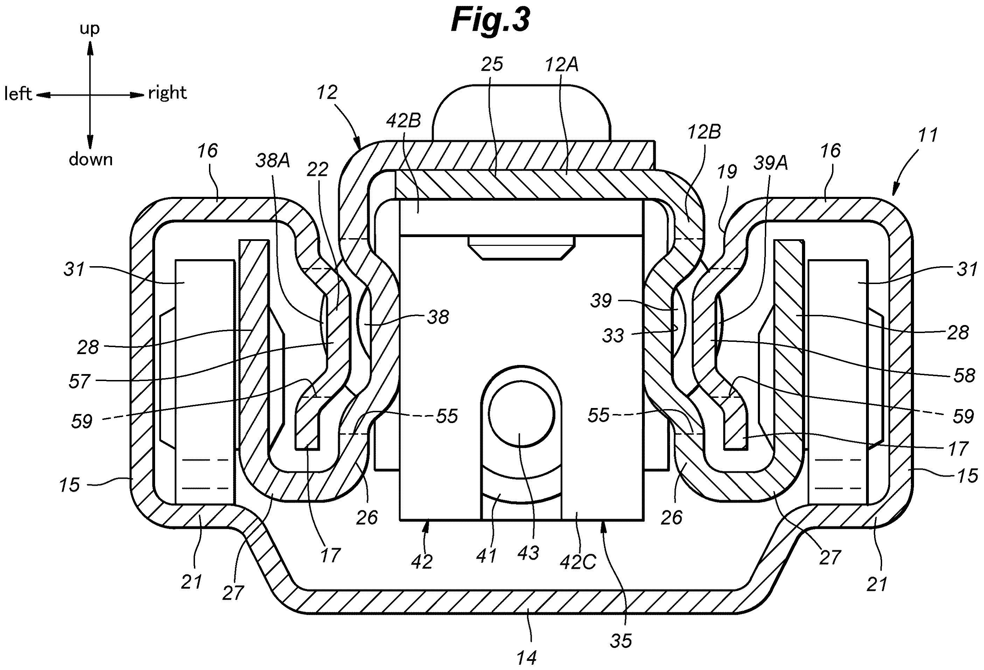

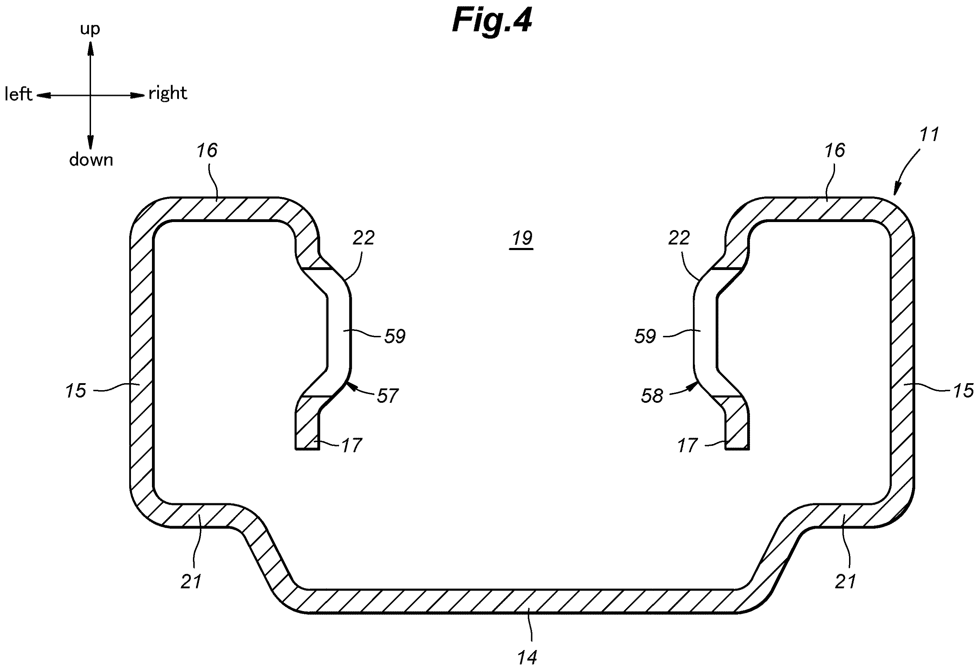

As shown in FIGS. 3 and 4, the rail 11 has a channel cross section. More specifically, the rail 11 has a rail bottom wall 14 with faces vertically, a pair of rail outer walls 15 extending upward from either lateral edge of the rail bottom wall 14 and facing laterally, a pair of rail upper walls 16 extending toward each other from the upper ends of the left and right rail outer walls 15 and facing vertically, and a pair of rail inner walls 17 extending downward from the inner ends of the left and right rail upper walls 16 and facing laterally.

The rail bottom wall 14, the left and right rail outer walls 15, the left and right rail upper walls 16, and the left and right rail inner walls 17 each extend in the fore and aft direction. The left and right rail outer walls 15 and the left and right rail inner walls 17 extend parallel to each other and are perpendicular to the rail bottom wall 14. The lower ends of the left and right rail inner walls 17 are positioned at a distance from the rail bottom wall 14. The rail 11 defines a rail slot 19 extending in the fore and aft direction at the upper end thereof. The rail slot 19 is defined by the left and right rail inner walls 17. The rail 11 may be formed by stamp forming sheet metal. The left and right ends of the rail bottom wall 14 may each be provided with a step portion 21 which is raised upward. The left and right step portions 21 extend in the fore and aft direction and have flat upper surfaces.

The left and right rail inner walls 17 are formed with protrusions 22 that protrude toward each other and extend in the fore and aft direction. The left and right protrusions 22 may have an arcuate or trapezoidal cross section. Each protrusion 22 may be positioned in a vertically intermediate portion of the corresponding rail inner wall 17. The upper and lower ends of each rail inner wall 17 are positioned laterally outwardly of the corresponding protrusion 22.

As shown in FIG. 3, the slider 12 is positioned at the open end of the rail slot 19 and includes a plate-shaped base portion 25 with faces vertically, a pair of slider inner walls 26 extending downward from the left and right side edges of the base portion 25, respectively, toward the rail bottom wall 14, a pair of slider lower walls 27 extending laterally outward from the respective lower ends of the left and right slider inner walls 26, and a pair of slider outer walls 28 extending upward from the left and right outer ends of the left and right slider lower walls 27, respectively. The left and right slider inner walls 26 correspond to the third side wall and the fourth side wall in the claims. The base portion 25, the left and right slider inner walls 26, the left and right slider lower walls 27, and the left and right slider outer walls 28 extend in the fore and aft direction.

The slider 12 may be formed by fastening together a plurality of stamp formed or roll formed sheet metal. In this embodiment, the slider 12 is composed of a first piece 12A forming the base portion 25, the left slider inner wall 26, the left slider lower wall 27, and the left slider outer wall 28, and a second piece 12B forming the base portion 25, the right slider inner wall 26, the right slider lower wall 27, and the right slider outer wall 28. The first piece 12A and the second piece 12B are overlapped with each other at their respective base portions 25 and joined together to form the slider 12. In another embodiment, the slider 12 may be formed from a single piece of stamp formed or roll formed sheet metal. The fore and aft length of the slider 12 is set to be shorter than the fore and aft length of the rail 11. The slider 12 is connected to the seat cushion 5 at the base portion 25 thereof.

The base portion 25 may be positioned above the left and right rail upper walls 16, or may also be positioned below the left and right rail upper walls 16. The left and right slider inner walls 26 oppose each other with a gap defined therebetween. The left and right slider inner walls 26 are positioned between the left and right rail inner walls 17. Each slider inner wall 26 opposes the corresponding rail inner wall 17 on the left or right with a gap defined therebetween. Each slider lower wall 27 passes between the rail bottom wall 14 and the lower end of the corresponding rail inner wall 17 and extends laterally. Each slider outer wall 28 is positioned laterally between the rail outer wall 15 and the rail inner wall 17 on the corresponding side. A plurality of wheels 31 are rotatably supported on the outer side of each slider outer wall 28. Each wheel 31 has a rotation axis that extends laterally and rests on the rail bottom wall 14. In this embodiment, each wheel 31 rests on the upper surface of the corresponding step portion 21 of the rail bottom wall 14. The slider 12 can smoothly slide along the rail 11 by contacting the rail 11 with the wheels 31. With the above-described configuration, the slider 12 is received in the rail 11 and slidably engages with the rail 11. In other embodiments, the slider 12 is supported on the rail 11 via a ball or roller bearing.

The left and right slider inner walls 26 are formed with recesses 33 that are recessed toward each other and extend in the fore and aft direction. A protrusion is formed on the rear side of the recess 33 of each slider inner wall 26. The cross sections of the left and right recesses 33 viewed from the front are preferably formed in an arcuate or a trapezoid shape. Each recess 33 is preferably positioned in a vertical middle part of the corresponding slider inner wall 26. Each recess 33 is positioned so as to laterally oppose the protrusion 22 of the corresponding rail 11.

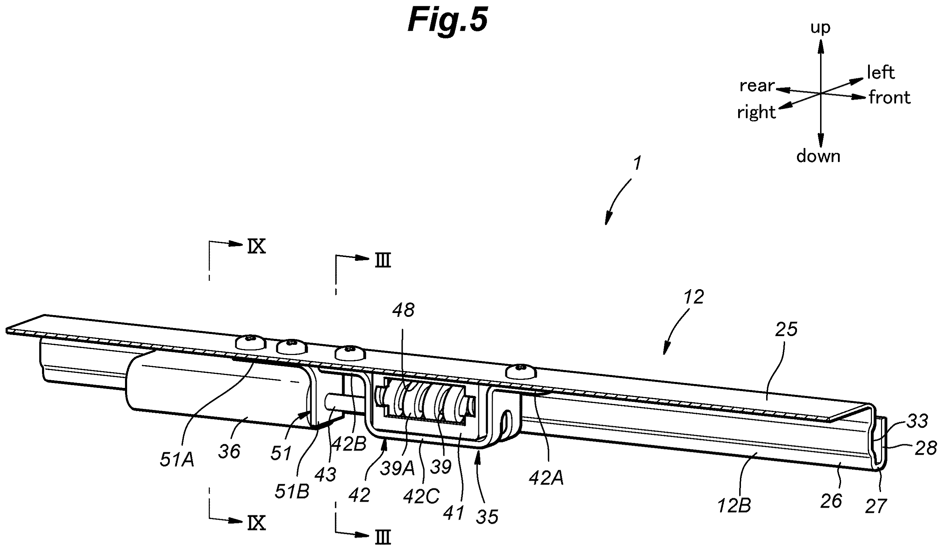

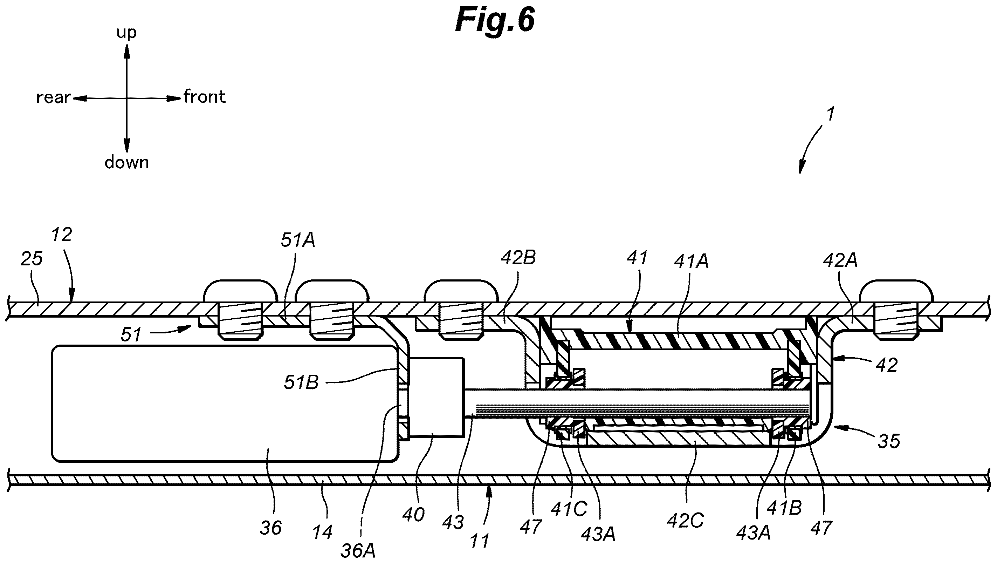

The base portion 25 and the left and right slider inner walls 26 thus give the slider 12 a channel shape that opens toward the rail bottom wall 14, i.e., downward. As shown in FIGS. 5 and 6, a screw assembly 35 and an electric motor 36 are supported on the underside of the base portion 25. The screw assembly 35 includes a pair of screw members 38, 39 supported by the slider 12 so as to be rotatable around an axis extending in the fore and aft direction. The electric motor 36 is supported by the slider 12 and rotates the screw members 38, 39.

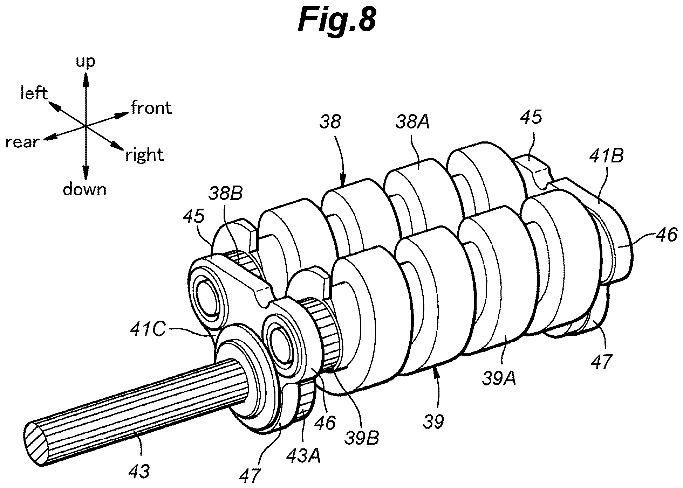

As shown in FIG. 8, in this embodiment, the screw members 38, 39 include a first screw member 38 and a second screw member 39. In another embodiment, the screw assembly 35 may have a single screw member. The first screw member 38 and the second screw member 39 have threads 38A, 39A on the outer circumferential surfaces of the middle parts thereof with respect to the longitudinal direction. The pitch of the threads 38A and 39A may be determined according to the size of the electric slide rail device 1 and the required drive force in the longitudinal direction of the electric slide rail device 1. For example, when the required drive force is to be increased, the pitch of the threads 38A and 39A may be decreased. As shown in FIGS. 5 and 6, the screw assembly 35 further includes a gear case 41 that rotatably supports the first screw member 38 and the second screw member 39, and a first bracket 42 that secures the gear case 41 on the slider 12.

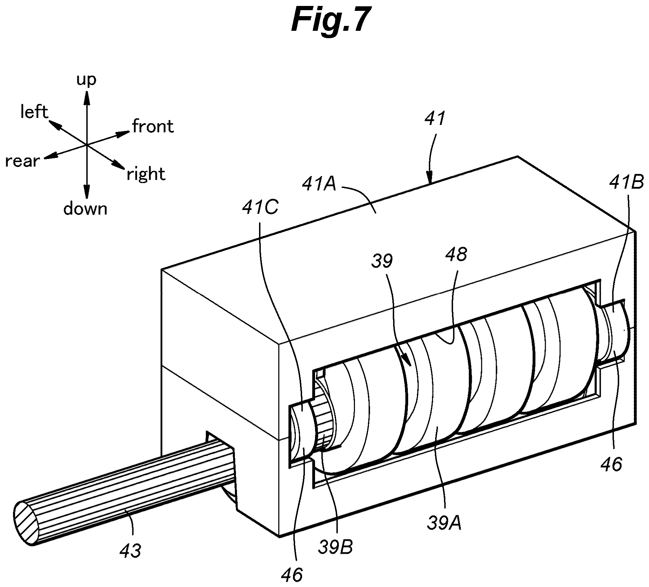

As shown in FIGS. 7 and 8, the gear case 41 is formed in a rectangular box shape that is elongated in the fore and aft direction. The gear case 41 rotatably supports the first screw member 38, the second screw member 39, and a drive shaft 43 that is connected to the rotating shaft 36A of the electric motor 36. The first screw member 38, the second screw member 39, and the drive shaft 43 extend in the fore and aft direction and are arranged in parallel to each other in the gear case 41. The gear case 41 has a box-shaped outer case 41A that forms an outer shell, a front support member 41B, and a rear support member 41C fixed to the front and rear ends of the outer case 41A. The front support member 41B and the rear support member 41C are provided with first bearing portions 45 that rotatably support the front and rear ends of the first screw member 38, second bearing portions 46 that rotatably support the front and rear ends of the second screw member 39, and front and rear third bearing portions 47 that rotatably support the drive shaft 43.

The first screw member 38 is positioned along the left side of the gear case 41, and the second screw member 39 is positioned along the right side of the gear case 41. The drive shaft 43 is positioned under the intermediate portion between the first screw member 38 and the second screw member 39. The drive shaft 43 is fitted with a drive gear 43A inside the gear case 41. The first screw member 38 is fitted with a first gear 38B that meshes with the drive gear 43A. The second screw member 39 is fitted with a second gear 39B that meshes with the drive gear 43A. The drive gear 43A, the first gear 38B, and the second gear 39B may consist of spur gears. When the drive shaft 43 rotates, the first screw member 38 and the second screw member 39 rotate in the same direction as each other. The first gear 38B and the second gear 39B may be symmetrical to each other.

As shown in FIGS. 5 and 6, the gear case 41 has a pair of case openings 48 which expose the first screw member 38 and the second screw member 39 to the corresponding sides. The thread 38A of the first screw member 38 protrudes leftward through the case opening 48 formed on the left side of the gear case 41. Similarly, the thread 39A of the second screw member 39 protrudes rightward through the case opening 48 formed on the right side of the gear case 41. The case openings 48 are formed in the outer case 41A.

The first bracket 42 extends forward and backward and is provided with a first connecting portion 42A provided at the front end thereof and a second connecting portion 42B provided at the rear end thereof. The first bracket 42 is connected to the lower surface of the base portion 25 of the slider 12 at the first connecting portion 42A and the second connecting portion 42B. The first bracket 42 has a support portion 42C extending from the first connecting portion 42A to the second connecting portion 42B. The first bracket 42 may be a single-piece metal member including the first connecting portion 42A, the second connecting portion 42B, and the support portion 42C. The support portion 42C includes a part located below the first connecting portion 42A and the second connecting portion 42B. The support portion 42C allows the first bracket 42 to cooperate with the base portion 25 to form a closed cross-section structure. The gear case 41 is positioned between the base portion 25 of the slider 12 and the support portion 42C of the first bracket 42. The first bracket 42 is formed by bending sheet metal. The first connecting portion 42A extends forward from the front end of the gear case 41, and the second connecting portion 42B extends rearward from the rear end of the gear case 41. The first connecting portion 42A and the second connecting portion 42B may be fastened to the base portion 25 by fastening members such as screws or rivets. The distance between the fastening points of the first connecting portion 42A and the second connecting portion 42B is set to be longer than the fore and aft length of the gear case 41.

A second bracket 51 is provided behind the first bracket 42 to support the electric motor 36 on the base portion 25 of the slider 12. The second bracket 51 has a connecting portion 51A connected to the base portion 25 and a support portion 51B extending from the connecting portion 51A to the opposite side of the base portion 25, i.e., downward. The support portion 51B extends orthogonally to the connecting portion 51A so that the second bracket 51 is formed in an L-shape. The electric motor 36 is fixed to the support portion 51B at one end thereof. In this embodiment, the electric motor 36 is positioned under the connecting portion 51A, and the second bracket 51 supports the end of the electric motor 36 on the side of the screw members 38 and 39 in the manner of a cantilever.

The rear end of the drive shaft 43 protrudes forward from the rear support member 41C of the gear case 41 and extends forward through a through hole formed in the first bracket 42. The rotating shaft 36A of the electric motor 36 is connected to the rear end of the drive shaft 43. The rotating shaft 36A and the drive shaft 43 may be connected to each other by a coupling. The rotating shaft 36A and the drive shaft 43 may also have a fitting portion that meshes with each other. The rotating shaft 36A of the electric motor 36 and the drive shaft 43 are arranged on the same straight line. The electric motor 36 is formed in a cylindrical shape and extends forward and backward.

A speed reduction mechanism 40 may be provided between the rotating shaft 36A of the electric motor 36 and the drive shaft 43. The speed reduction mechanism 40 may be, for example, a planetary gear mechanism. The speed reduction mechanism 40 may be provided on the surface of the support portion 51B of the second bracket 51 that faces away from the electric motor 36. In another embodiment, the speed reduction mechanism 40 may be supported on the rear end surface of the gear case 41. The speed reduction mechanism 40 is an optional component and can be omitted.

The screw assembly 35, the electric motor 36, the first bracket 42, and the second bracket 51 are positioned under the base portion 25 and between the left and right slider inner walls 26. The left and right slider inner walls 26 are provided with slider openings 55 that are positioned so as to correspond to the screw assembly 35. The slider openings 55 are formed in the recesses 33 of the slider inner walls 26. A left portion of the thread 38A of the first screw member 38 passes through the left case opening 48 of the gear case 41 and the slider opening 55 of the left slider inner wall 26, and protrudes leftward out of the left slider inner wall 26. Similarly, a right portion of the thread 39A of the second screw member 39 is passed through the right case opening 48 of the gear case 41 and the slider opening 55 of the right slider inner wall 26, and protrudes rightward out of the right slider inner wall 26.

As shown in FIG. 2, the rail 11 is formed with screw engagement parts 57 and 58 that extend in the fore and aft direction and engage with the screw members 38 and 39. The screw engagement parts 57 and 58 include a first screw engagement part 57 formed on the left rail inner wall 17 and engaging with the thread 38A of the first screw member 38, and a second screw engagement part 58 formed on the right rail inner wall 17 and engaging with the thread 39A of the second screw member 39. The first screw engagement part 57 and the second screw engagement part 58 are formed on the protrusions 22 of the rail inner walls 17, respectively. The first screw engagement part 57 and the second screw engagement part 58 each include a plurality of engagement holes 59 formed in the corresponding protrusion 22 along the fore and aft direction. The first screw member 38 engages with the engagement holes 59 of the first screw engagement part 57 at the left part of the thread 38A of the first screw member 38 and moves forward and backward relative to the first screw engagement part 57 by rotating around the fore and aft direction. Similarly, the second screw member 39 engages with the engagement holes 59 of the second screw engagement part 58 at the right part of the thread 39A of the second screw member 39 and moves forward and backward relative to the second screw engagement part 58 by rotating around the fore and aft direction.

The electric slide rail device 1 is controlled by a control device 66. The control device 66 is provided, for example, on the floor 3. The control device 66 is an electronic control device and is connected to a power source 68 and an operation switch 67. The operation switch 67 has a button corresponding to forward movement and another button corresponding to reverse movement. The control device 66 controls the direction and amount of rotation of the electric motor 36 based on the signal from the operation switch 67. This allows an operator to activate the electric slide rail device 1 by operating the operation switch 67, and to move the vehicle seat 2 forward or backward relative to the floor 3.

The rail 11 of each of the left and right electric slide rail devices 1 is connected to the vehicle floor 3 via a bracket or directly. Each rail 11 may be received in a rail groove 4 formed in the floor 3. An upper surface of the rail upper wall 16 of the rail 11 may be positioned flush with an upper surface of the floor 3. By positioning the rail 11 in the rail groove 4, the rail 11 is prevented from protruding from the floor 3. The sliders 12 of the left and right electric slide rail devices 1 are connected to the seat cushion 5. The sliders 12 of the left and right electric slide rail devices 1 may be connected to each other by a connecting member.

The rotation of the electric motor 36 is transmitted to the first screw member 38 and the second screw member 39 via the rotating shaft 36A, the drive shaft 43, the drive gear 43A, and the first gear 38B and the second gear 39B. As a result, the first screw member 38 and the second screw member 39 rotate in the same direction. As the first screw member 38 and the second screw member 39 rotate, the first screw member 38 and the second screw member 39 move back and forth relative to the first screw engagement part 57 and the second screw engagement part 58, and the slider 12 moves back and forth relative to the rail 11.

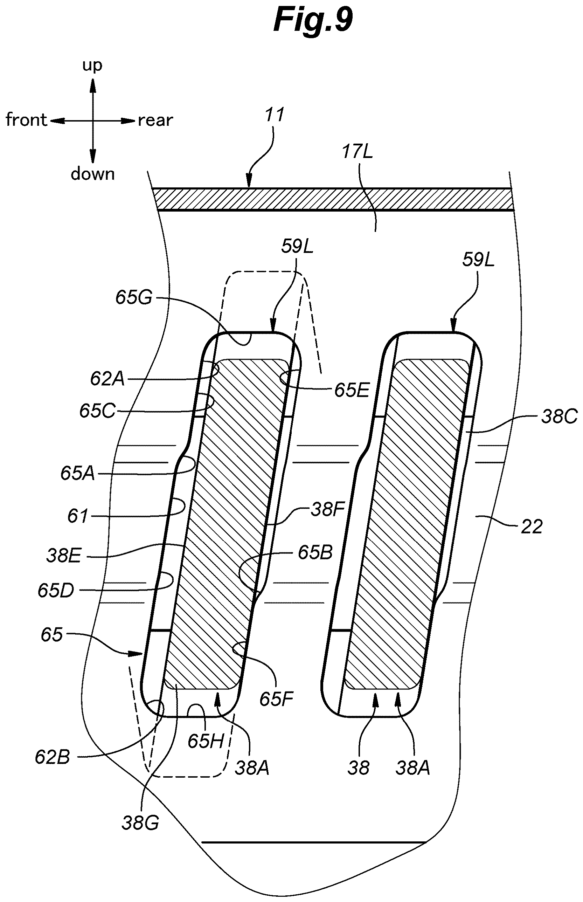

FIG. 9 is a cross-sectional view of the left rail inner wall 17L viewed from the left. FIG. 9 shows a cross section perpendicular to the lateral direction and along the left side surface of the left rail inner wall 17L. The engagement holes 59L forming the first screw engagement part 57 formed in the left rail inner wall 17L are arranged in the fore and aft direction (first direction). Each of the engagement holes 59L is elongated at an angle with respect to the vertical direction (second direction) perpendicular to the fore and aft direction. In this embodiment, each of the engagement holes 59L is inclined rearward toward the top. The engagement holes 59 are formed in the same shape and extend parallel to each other.

Each engagement hole 59L includes a first portion 61 positioned in the center in the longitudinal direction thereof, and a pair of second portions 62A and 62B positioned on either side of the first portion 61. Each engagement hole 59L thus includes, from top to bottom, the upper second portion 62A, the first portion 61, and the lower second portion 62B in that order. The width of the second portions 62A and 62B in the fore and aft direction (first direction) is smaller than the width of the first portion 61 in the first direction.

The edge portion 65 of each engagement hole 59L is provided with steps 65A, 65B at the boundaries between the first portion 61 and the second portions 62A and 62B. The edge portion 65 has an upper front edge portion 65C constituting an upper portion of the front edge of the engagement hole 59L, a lower front edge portion 65D constituting a lower portion of the front edge of the engagement hole 59L, an upper rear edge portion 65E constituting an upper portion of the rear edge of the engagement hole 59L, a lower rear edge portion 65F constituting a lower portion of the rear edge of the engagement hole 59L, an upper end edge portion 65G constituting the upper edge of the engagement hole 59L, and a lower end edge portion 65H constituting the lower edge of the engagement hole 59L.

The step 65A is positioned between the upper front edge portion 65C and the lower front edge portion 65D. The step 65A causes the lower front edge portion 65D to be offset forward from the upper front edge portion 65C. The step 65B is positioned between the upper rear edge portion 65E and the lower rear edge portion 65F. The step 65B causes the upper rear edge portion 65E to be offset rearward from the lower rear edge portion 65F.

The upper front edge portion 65C, the lower front edge portion 65D, the upper rear edge portion 65E, and the lower rear edge portion 65F extend parallel to one another. The upper end edge portion 65G and the lower end edge portion 65H extend in the fore and aft direction.

The upper front edge portion 65C forms the front edge of the upper second portion 62A. The lower front edge portion 65D forms the front edges of the first portion 61 and the lower second portion 62B. The upper rear edge portion 65E forms the rear edges of the upper second portion 62A and the first portion 61. The lower rear edge portion 65F forms the rear edge of the lower second portion 62B. The upper end edge portion 65G forms the upper end portion of the upper second portion 62A. The lower end edge portion 65H forms the lower end portion of the lower second portion 62B.

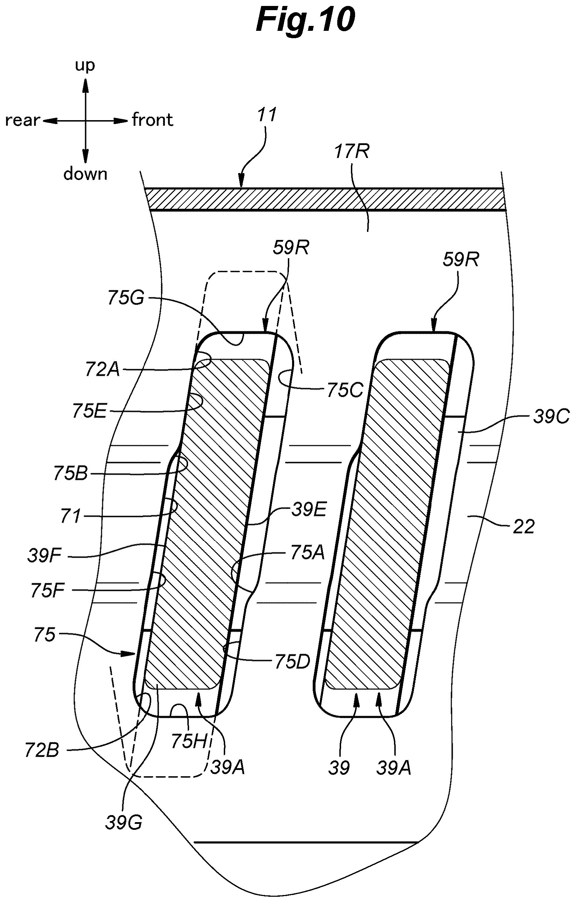

FIG. 10 is a cross-sectional view of the right rail inner wall 17R viewed from the right. FIG. 10 shows a cross section perpendicular to the lateral direction and along the right side surface of the right rail inner wall 17R. The engagement holes 59R forming the second screw engagement part 58 formed in the right rail inner wall 17R are arranged in the fore and aft direction (first direction). Each of the engagement holes 59R is elongated at an angle with respect to the vertical direction (second direction) perpendicular to the fore and aft direction. In this embodiment, each of the engagement holes 59R is inclined rearward toward the top. The engagement holes 59R are formed in the same shape and extend parallel to each other.

Each engagement hole 59R includes a first portion 71 positioned in the center in the longitudinal direction thereof, and a pair of second portions 72A and 72B positioned on either side of the first portion 71. Each engagement hole 59R thus includes, from top to bottom, the upper second portion 72A, the first portion 71, and the lower second portion 72B in that order. The width of the second portions 72A and 72B in the fore and aft direction (first direction) is smaller than the width of the first portion 71 in the first direction.

The edge portion 75 of each engagement hole 59R is provided with steps 75A and 75B at the boundaries between the first portion 71 and the second portions 72A and 72B. The edge portion 75 has an upper front edge portion 75C constituting an upper portion of the front edge of the engagement hole 59R, a lower front edge portion 75D constituting a lower portion of the front edge of the engagement hole 59R, an upper rear edge portion 75E constituting an upper portion of a rear edge of the engagement hole 59R, a lower rear edge portion 75F constituting a lower portion of the rear edge of the engagement hole 59R, an upper end edge portion 75G constituting the upper edge of the engagement hole 59R, and a lower end edge portion 75H constituting the lower edge of the engagement hole 59R.

The step 75A is positioned between the upper front edge portion 75C and the lower front edge portion 75D. The step 75A causes the lower front edge portion 75D to be offset rearward from the upper front edge portion 75C. The step 75B is positioned between the upper rear edge portion 75E and the lower rear edge portion 75F. The step 75B causes the upper rear edge portion 75E to be offset forward from the lower rear edge portion 75F.

The upper front edge portion 75C, the lower front edge portion 75D, the upper rear edge portion 75E, and the lower rear edge portion 75F extend parallel to one another. The upper end edge portion 75G and the lower end edge portion 75H extend in the fore and aft direction.

The upper front edge portion 75C forms the front edge of the upper second portion 72A. The lower front edge portion 75D forms the front edges of the first portion 71 and the lower second portion 72B. The upper rear edge portion 75E forms the rear edges of the upper second portion 72A and the first portion 71. The lower rear edge portion 75F forms the rear edge of the lower second portion 72B. The upper end edge portion 75G forms the upper end portion of the upper second portion 72A. The lower end edge portion 75H forms the lower end portion of the lower second portion 72B.

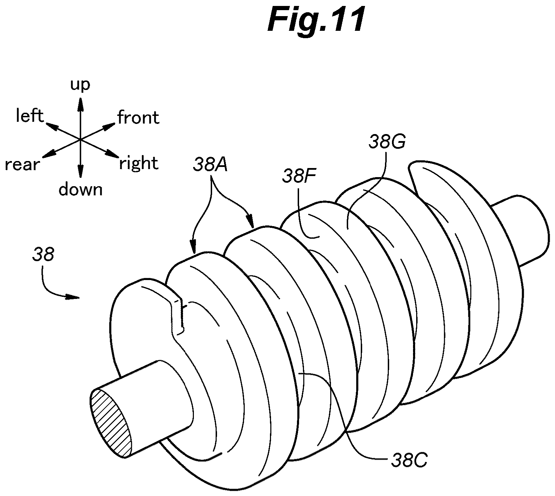

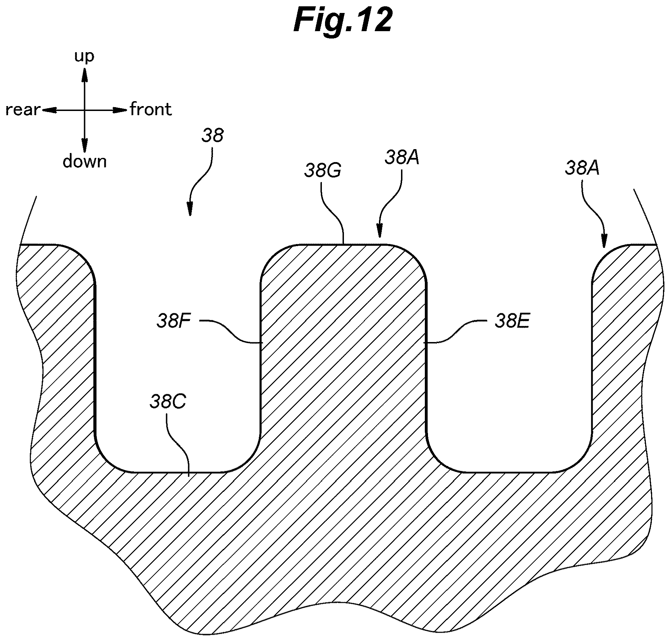

FIG. 11 is a perspective view of the first screw member 38. The first screw member 38 is provided with a cylindrical shaft portion 38C extending in the fore and aft direction. The thread 38A is formed in a spiral shape on the outer circumferential surface of the shaft portion 38C. In this embodiment, the thread 38A is a left-handed spiral. FIG. 12 is a cross-sectional view of the thread 38A of the first screw member 38. The thread 38A has a front side surface 38E, a rear side surface 38F, and a top surface 38G. In the cross section of the thread 38A, the front side surface 38E and the rear side surface 38F extend substantially perpendicular to the outer circumferential surface of the shaft portion 38C. In the cross section of the thread 38A, the top surface 38G extends parallel to the outer circumferential surface of the shaft portion 38C. The thread 38A has a rectangular cross-sectional shape. Similar to the first screw member 38, the second screw member 39 has a screw thread 39A, a shaft portion 39C, a front side surface 39E, a rear side surface 39F, and a top surface 39G.

The thread 38A of the first screw member 38 is received in the engagement holes 59L formed in the left rail inner wall 17L. As shown in FIG. 9, the first screw member 38 does not abut against the edge portion 65 of the engagement hole 59L in the first portion 61 but abuts against the edge portion 65 of the engagement hole 59L in at least one of the upper and lower second portions 62A, 62B. The first screw member 38 also abuts against the edge portion 65 in one of the upper and lower second portions 62A, 62B. The first screw member 38 also abuts against the edge portion 65 in one of the upper and lower second portions 62A, 62B in the fore and aft direction.

In FIG. 9, the first screw member 38 rotates counter-clockwise as viewed from the rear, and the rear side surface 38F of the thread 38A abuts against the lower rear edge portion 65F of the engagement hole 59L at the lower second portion 62B. At this time, a gap is formed between the rear side surface 38F of the thread 38A and the upper rear edge portion 65E, and the rear side surface 38F does not abut against the upper rear edge portion 65E. In addition, a gap is formed between the upper end edge portion 65G and the thread 38A of the first screw member 38. A gap is formed between the lower end edge portion 65H and the thread 38A of the first screw member 38.

Similarly, as shown in FIG. 10, the second screw member 39 rotates counter-clockwise as viewed from the rear, and the rear side surface 39F of the thread 39A of the second screw member 39 abuts against the upper rear edge portion 75E of the engagement hole 59R. At this time, the rear side surface 39F of the thread 39A of the second screw member 39 does not abut against the lower rear edge portion 75F. Also, a gap is formed between the upper end edge portion 75G and the thread 39A of the second screw member 39. A gap is formed between the lower end edge portion 75H and the thread 39A of the second screw member 39.

The rear side surface 38F of the thread 38A of the first screw member 38 pushes the lower rear edge portion 65F of the engagement hole 59L rearward, and the rear side surface 38F of the thread 39A of the second screw member 39 pushes the upper rear edge portion 75E of the engagement hole 59R rearward, causing the slider 12 to move forward relative to the rail 11.

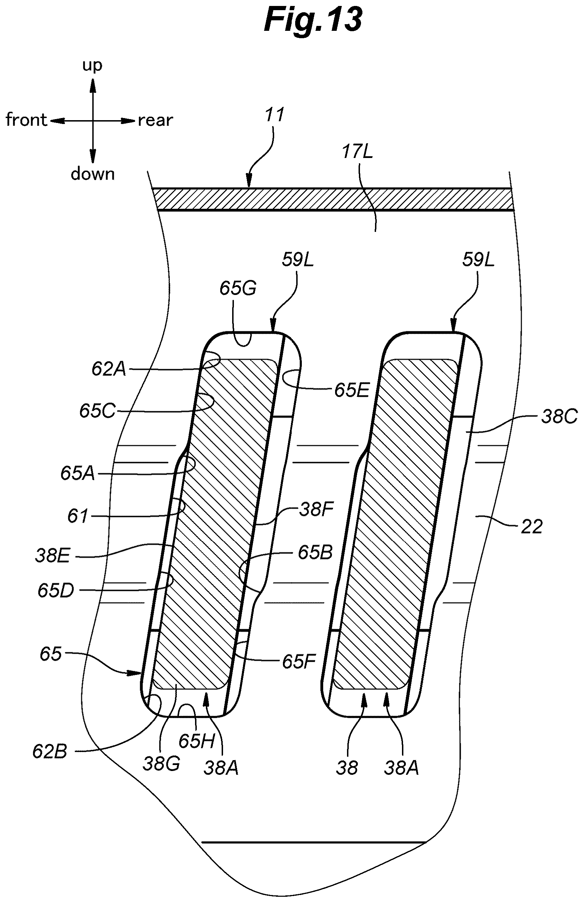

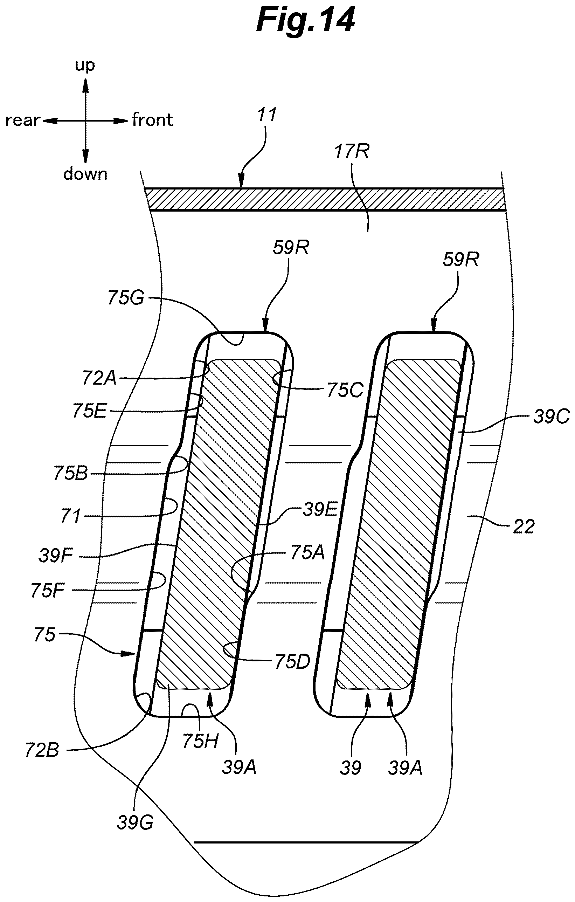

As the first screw member 38 rotates clockwise and the second screw member 39 rotates clockwise as viewed from the rear, the slider 12 moves rearward relative to the rail 11. At this time, as shown in FIG. 13, the front side surface 38E of the thread 38A of the first screw member 38 abuts against the upper front edge portion 65C of the engagement hole 59L in the upper second portion 62A. At this time, a gap is formed between the front side surface 38E of the thread 38A and the lower front edge portion 65D, and the front side surface 38E does not abut against the lower front edge portion 65D. Also, as shown in FIG. 14, the front side surface 39E of the thread 39A of the second screw member 39 abuts against the lower front edge portion 75D of the engagement hole 59R in the lower second portion 72B. At this time, a gap is formed between the front side surface 39E of the thread 39A and the upper front edge portion 75C, and the front side surface 39E does not abut against the upper front edge portion 75C.

The manufacturing method for the electric slide rail device 1 includes the steps of forming a plurality of engagement holes 59 in the rail 11, assembling the screw assembly 35 and the electric motor 36 to the slider 12, and assembling the slider 12 with the screw assembly 35 and the electric motor 36 assembled thereto, to the rail 11. The manufacturing method of the rail 11 includes the steps of preparing a flat metal plate, forming a plurality of engagement holes 59 in the metal plate, and bending the metal plate with the engagement holes 59 formed therein to form the rail bottom wall 14, the rail outer walls 15, the rail upper wall 16, the rail inner walls 17, the rail slot 19, the step portions 21, and the protrusions 22.

This aspect of the present invention provides a manufacturing method for an electric slide rail device that can suppress variations in the contact position between the screw member and the engagement hole.

According to this embodiment, the first screw member 38 does not contact the edge portion 65 of the engagement hole 59L in the first portion 61 but contacts the edge portion 65 of the engagement hole 59L in at least one of the second portions 62A and 62B, so that the contact position between the first screw member 38 and the engagement hole 59L is limited. Also, the second screw member 39 does not contact the edge portion 75 of the engagement hole 59R in the first portion 71 but contacts the edge portion 75 of the engagement hole 59R in at least one of the second portions 72A and 72B, so that the contact position between the second screw member 39 and the engagement hole 59R is limited. This makes it possible to provide an electric slide rail device 1 that can suppress variations in the contact position between the first screw member 38 and the engagement hole 59L and the contact position between the second screw member 39 and the engagement hole 59R even if manufacturing errors or deformations occur in the electric slide rail device 1. When the contact position between the first screw member 38 and the engagement hole 59L varies, the contact angle of the first screw member 38 changes with the result that there is a risk that the first screw member 38 may rotate in response to a load applied to the slider 12. The same applies to the second screw member 39. In the electric slide rail device 1 according to this embodiment, variations in the contact position between the first screw member 38 and the engagement hole 59L and the contact position between the second screw member 39 and the engagement hole 59R are suppressed, so that the self-locking effect of the electric slide rail device 1 can be ensured.

In addition, gaps are formed between the upper and lower end edge portions 65G, 65H of the engagement hole 59L, and the thread 38A of the first screw member 38, which suppresses the generation of abnormal noises and reduces the rotational resistance of the first screw member 38. The same applies to the second screw member 39.

The present invention is not limited to the above embodiment but can be modified in a wide range of ways. For example, the helical direction of the thread 38A of the first screw member 38 and the thread 39A of the second screw member 39 may be changed as desired, and the extending direction of the engagement holes 59L, 59R may be determined according to the helical direction of the thread 38A of the first screw member 38 and the thread 39A of the second screw member 39. In addition, the cross-sectional shape of the thread 38A may be changed as desired. For example, the cross-sectional shape of the thread 38A may be trapezoidal, and the same applies to the thread 39A.

When the slider 12 engaged with the rail 11 slides back and forth relative to the rail 11, the seat main body 7 supported by the slider 12 also slides back and forth relative to the floor 3. In other words, the electric slide rail device 1 serves to slide the seat main body 7, which is a second structure, back and forth relative to the floor 3, which is a first structure.

Various electrical components (e.g., a motor for a reclining device, an operation switch 67, etc.) may be provided on the second structure such as the seat main body 7 that can slide back and forth on account of the electric slide rail device 1. In this case, the second structure such as the seat main body 7 functions as a support for supporting the electrical components. In this conjunction, since the second structure that supports the electrical components moves relative to the first structure, it is necessary to arrange wiring for the electrical components while taking into account the movement of the second structure.

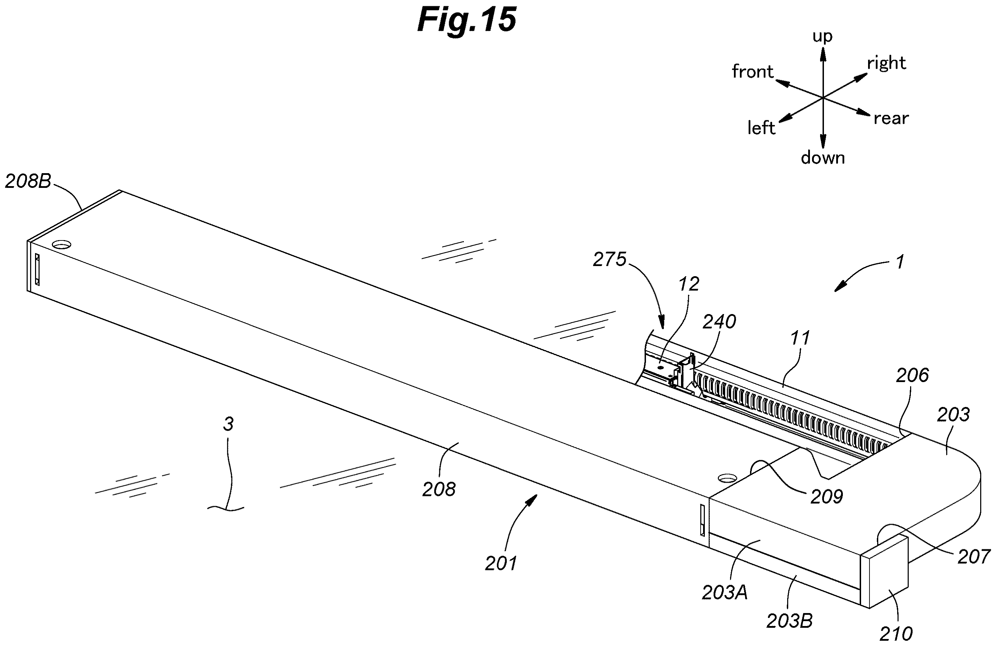

Therefore, as shown in FIG. 15, the electric slide rail device 1 is provided with a wire managing device 201 for supplying power and transmitting signals to the electrical components.

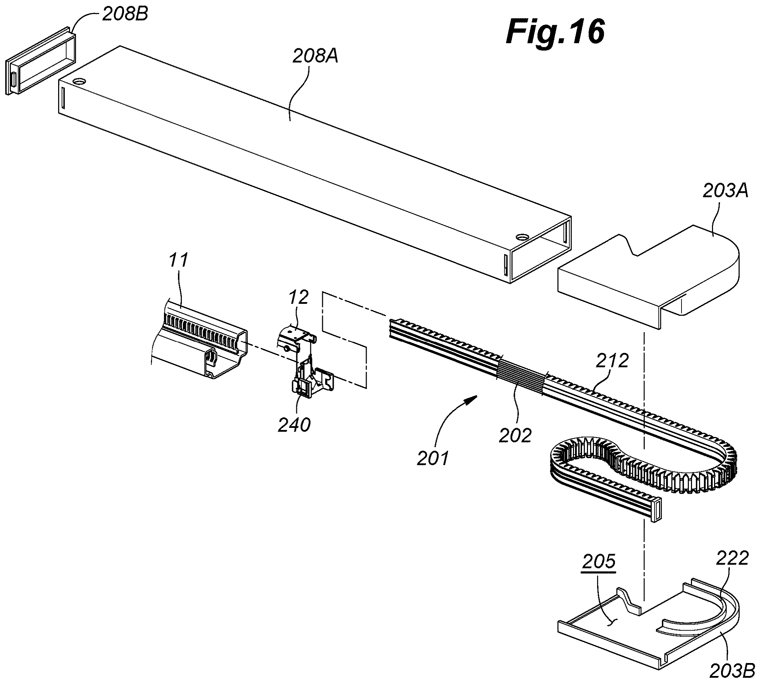

FIG. 16 shows an exploded perspective view of the wire managing device 201. As shown in FIGS. 15 and 16, the wire managing device 201 includes a wire harness (hereinafter, referred to as a wire harness 202, see FIG. 16) connected to an electrical component such as an operation switch 67, and a storage case 203 (see FIG. 15) for storing a part of the wire harness 202 therein.

The wire managing device 201 enables the wire harness 202 to be stored and paid out in the vehicle seat 2 in accordance with the position of the slider 12 while suppressing unnecessary movement of the wire harness 202 relative to the floor 3. In a certain embodiment, the wire harness 202 is used for power supply and communication. Also, the wire managing device 201 functions as a cover that covers an opening of the rail 11 as shown in FIG. 15.

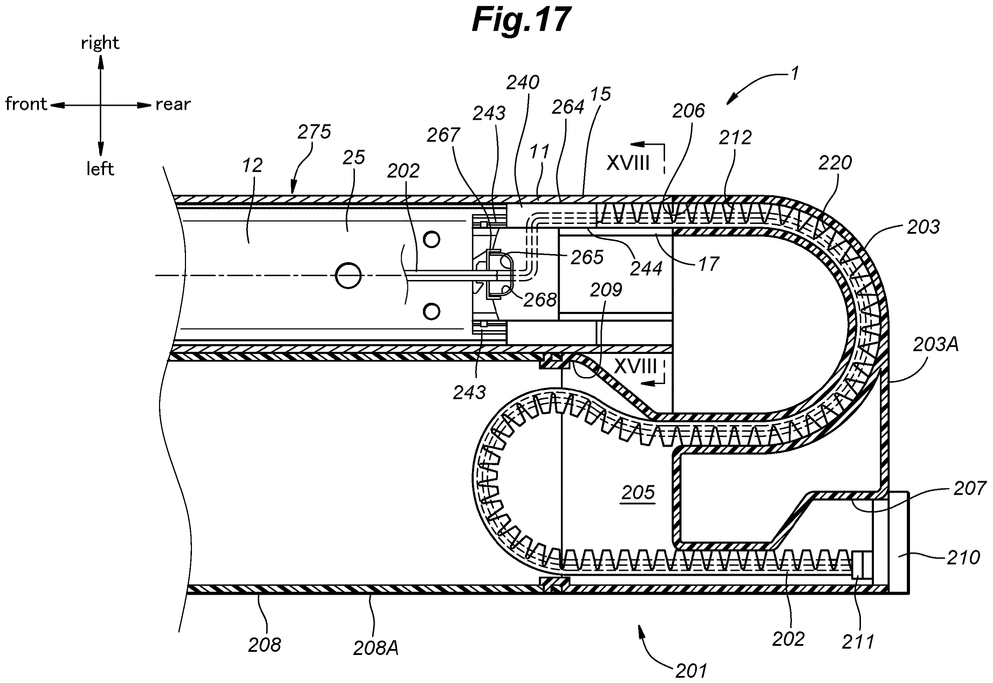

The storage case 203 is a plastic member having a flat box shape. As shown in FIGS. 16 and 17, the storage case 203 internally defines a storage space 205 (also called a storage chamber) and is provided with an inlet hole 206 and an outlet hole 207 communicating the storage space 205 with the outside.

As shown in FIGS. 15 and 16, an extension member 208 for expanding the storage space 205 is connected to the storage case 203. The extension member 208 is a rectangular tubular member with an opening and a bottom. In this embodiment, the extension member 208 includes a rectangular tubular member 208A and a bottom member 208B that closes one end of the tubular member 208A and constitutes the bottom. The tubular member 208A is made of metal (preferably aluminum) and may be formed by extruding a metal material, for example. A communication hole 209 that communicates with the storage space 205 is provided on a side of the storage case 203, and the opening of the extension member 208 is connected to the communication hole 209, thereby expanding the storage space 205.

As shown in FIGS. 15 and 17, the inlet hole 206 of the storage case 203 is provided on the front side of the right half of the storage case 203 and is connected to the front end or rear end of the rail 11. In this embodiment, as shown in FIGS. 15 and 17, the inlet hole 206 is connected to the rear end of the rail 11. The inlet hole 206 is provided at the front end of the right half of the storage case 203 and opens forward.

As shown in FIG. 16, a connecting member 210 fixed to the floor 3 is inserted into the outlet hole 207. This connects the storage case 203 to the floor 3. As shown in FIG. 17, a connector 211 is provided on one end of the wire harness 202, and the connector 211 is connected to the connecting member 210 provided on the floor 3. This allows the wire harness 202 to be fixed at one end to the floor 3 (vehicle body), and also connected to a power source 68 (battery) and various devices provided on the vehicle body.

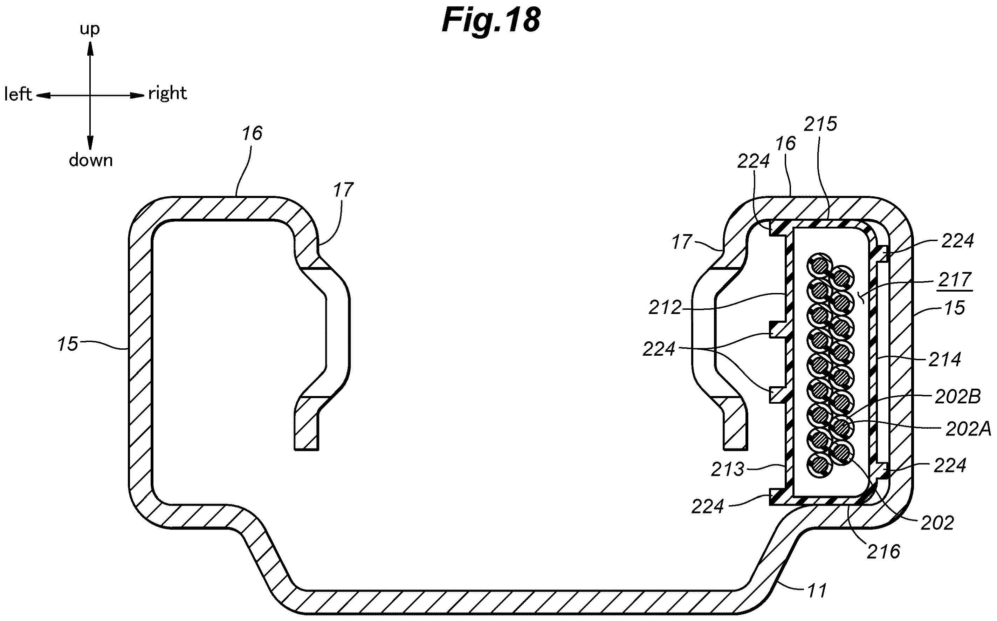

The wire harness 202 passes from the connecting member 210, through the storage space 205 and the inlet hole 206 in this order and enters the right rail 11 from the rear end thereof. In this embodiment, as shown in FIG. 18, the wire harness 202 is passed into the gap formed between the rail outer wall 15 and the rail inner wall 17 within the rail 11. As shown in FIG. 17, the wire harness 202 extends forward through the gap, passes under the rail inner wall 17 (see also FIG. 18), and reaches the slider 12.

As shown in FIG. 18, the wire harness 202 includes core wires 202A made of metal and a covering portion 202B made of an electrical insulating material and provided on the outer periphery of the core wires 202A. The core wires 202A are thus covered with the covering portion 202B.

The wire harness 202 electrically connects two devices. More specifically, the wire harness 202 may be configured to connect a power source 68 (battery) provided in the vehicle body to various pieces of electric equipment. The electric equipment connected to the wire harness 202 may include, for example, an electric motor 36 that slides the slider 12 relative to the rail 11. In addition, the electric equipment may include various actuators provided in the seat main body 7. For example, the electric equipment connected to the wire harness 202 may include a reclining device (more specifically, a drive source of the reclining device) that tilts the seat back 6 relative to the seat cushion 5, and a blower that is provided in at least one of the seat cushion 5, the seat back 6, and the headrest and blows air to a seated occupant.

The electric equipment may include an operation switch 67 provided on the seat main body 7 and receiving input from the seat occupant. In addition, the electric equipment may include various audio devices (speakers, microphones, etc.) provided on the seat main body 7, vibration generators, touch panel displays, and other notification devices that notify the seat occupant. The electric equipment may include sensors (cameras, seating sensors, temperature sensors, etc.) provided on the seat main body 7 that acquire biometric information of the seat occupant and information related to the external environment, and temperature adjustment devices for controlling the temperature of the seating surface. In addition, the electric equipment may include a control device 66 for controlling the movement of the seat main body 7. The electric equipment may further include devices that acquire detection results by sensors and various devices that control the operation of the notification devices.

As shown in FIGS. 16 and 17, the wire managing device 201 includes a protector 212 (which may also be called a wire harness protector or a wire protector) in addition to the wire harness 202 and the storage case 203. The protector 212 is cylindrical (tubular) and stores the wire harness 202 therein. One end of the protector 212 is connected (connected) to the slider 12.

As shown in FIG. 17, the protector 212 covers a part of the wire harness 202 extending from the vicinity of the connecting member 210 to the vicinity of the slider 12 and protects the wire harness 202. In this conjunction, in FIG. 16, a part of the protector 212 is omitted from illustration in order to show that the wire harness 202 is housed inside the protector 212.

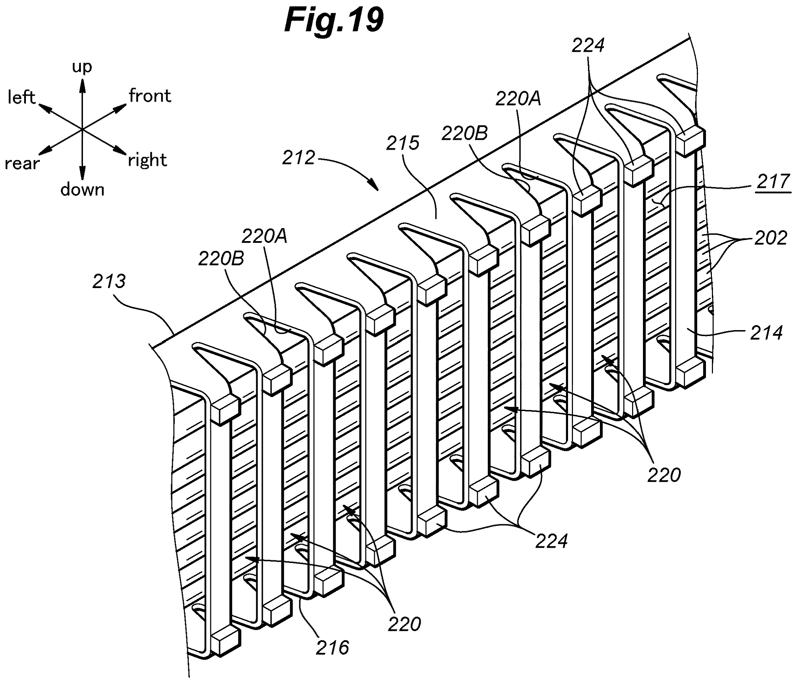

The protector 212 is made of a plastic member, as shown in FIGS. 18 and 19, has a tubular shape extending along the extending direction of the wire harness 202. The protector 212 may be formed, for example, with a rectangular tube that can be obtained by extruding a plastic material or the like and then cutting the rectangular tube. For the sake of convenience, the following description will focus on the part of the protector 212 that passes through the rail 11 and covers the wire harness 202 extending in the fore and aft direction, and the up, down, left and right directions are defined as indicated in the drawings. The remaining part of the protector 212 has a similar configuration.

FIGS. 18 and 19 show a protector 212 according to a first embodiment of the present invention. As shown in FIG. 18, the protector 212 of the first embodiment has a left wall 213, a right wall 214, an upper wall 215, and a lower wall 216, and is formed into a substantially rectangular tubular shape defining an inner chamber 217 for accommodating the wire harness 202 therein. The left wall 213, the right wall 214, the upper wall 215, and the lower wall 216 are each formed of a plate-shaped wall facing in a direction perpendicular to the extending direction of the wire harness 202. The left wall 213 is provided on the left side of the protector 212 and has a surface facing leftward. The right wall 214 is provided on the right side of the protector 212 and has a surface facing rightward (the opposite direction to the left wall 213). The upper wall 215 is provided on the upper side of the protector 212 and has a surface facing upward, and the lower wall 216 is provided on the lower side of the protector 212 and has a surface facing downward.

As shown in FIG. 19, the protector 212 is provided with a plurality of slits 220 cut from the right side surface to the left side surface. The slits 220 allow the protector 212 to bend and deform toward the left and right sides. The width of the slits 220 in the fore and aft direction progressively increases from the left side to the right side. In this embodiment, the slits 220 are triangular (or wedge-shaped) in top view (or when viewed from above). It is preferable that the slits 220 are provided at approximately equal intervals along the extending direction of the protector 212.

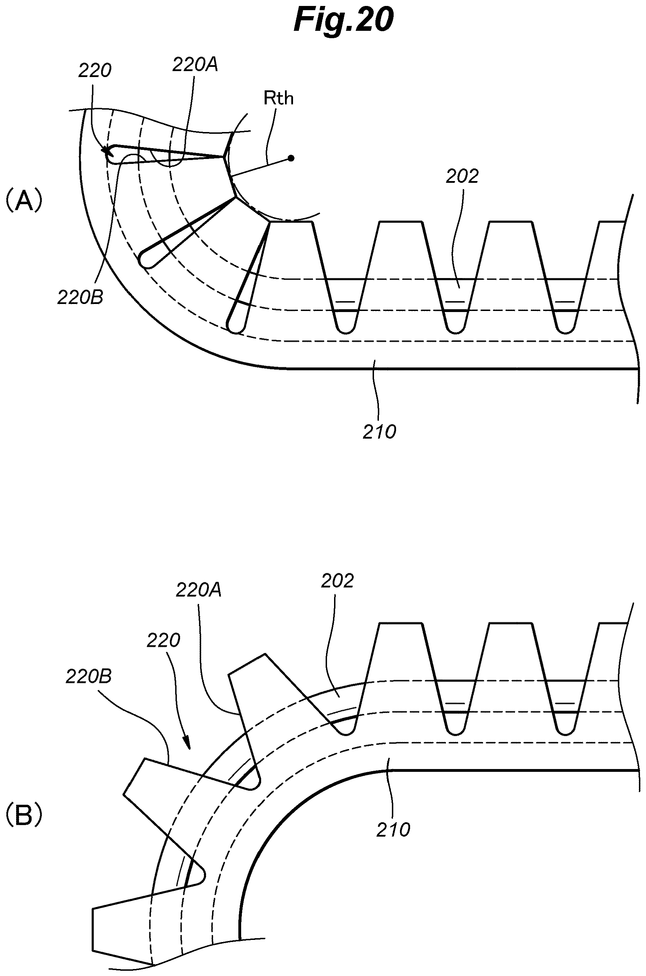

FIG. 20(A) shows the protector 212 bent to the right in top view, and FIG. 20(B) shows the protector 212 bent to the left in top view. As shown in FIGS. 20(A) and 20(B), the protector 212 is configured to be able to bend and deform on both the left and right sides (i.e., one side perpendicular to the extending direction and the other side opposite to the one side).

As shown in FIG. 20(A), when the protector 212 is bent to the right, the surface 220A defining the front edge of the slit 220 and the surface 220B defining the rear edge of the slit 220 come into contact with each other, and the bending radius of the protector 212 is limited to a range equal to or greater than a predetermined threshold value Rth. This prevents the bending radius of the wire harness 202 from becoming too small when the protector 212 is bent to the right. Note that the bending radius here refers to the radius of a circle (see the dashed line in FIG. 20(A)) that can best represent the inner curvature of the protector 212 at the bending point, and the smaller the bending radius is, the greater the curvature becomes.

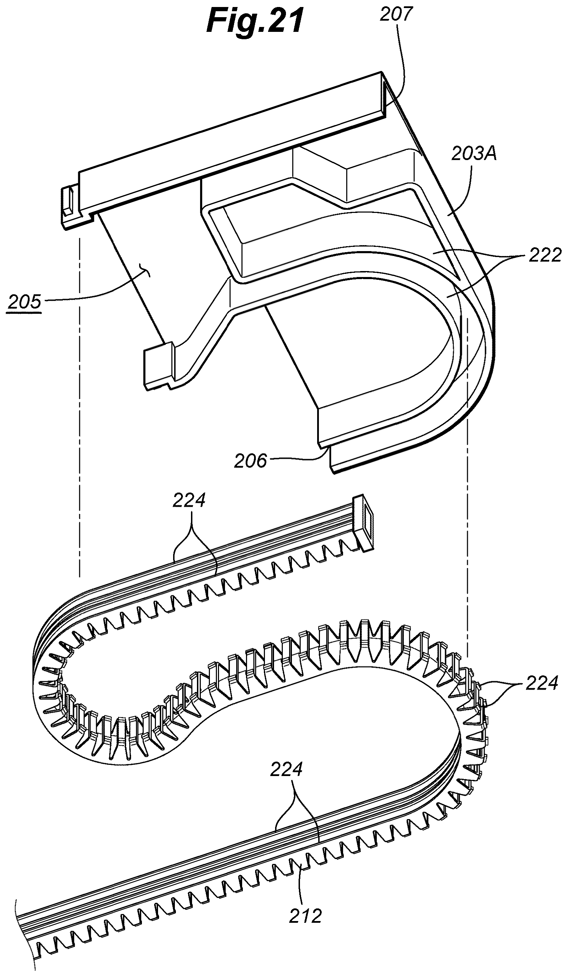

As shown in FIGS. 17 and 21, the protector 212, and a part of the wire harness 202 are stored in the storage space 205 defined in the storage case 203. A guide wall 222 that guides the movement direction of the protector 212 is provided inside the storage case 203. In this embodiment, the guide wall 222 is curved to form a substantially arcuate shape.

As shown in FIG. 17, the protector 212 extends linearly from the vicinity of the connecting member 210 in the storage space 205 and then curves toward one side (right side) where the slit 220 is provided. The protector 212 then curves toward the opposite side (left side) from the side where the slit 220 is provided while contacting the guide wall 222, passes through the inlet hole 206, and extends to the outside of the storage space 205 (outside of the storage case 203). In this way, the protector 212 forms an S-shape in the storage space 205, curving toward the side where the slit 220 is provided and the opposite side from the side where the slit 220 is provided.

The side surface of the protector 212 slides against the guide wall 222 which guides the protector 212 moving within the storage space 205 so as to cause the protector 212 to smoothly curve in the opposite direction (left side) to the side where the slit 220 is provided. This prevents the bending radius of the wire harness 202 from becoming too small.

In order to form this guide wall 222, it is preferable that the storage case 203 is formed of a case upper member 203A forming the upper half thereof and a case lower member 203B forming the lower half thereof, as shown in FIG. 16. By joining the case upper member 203A and the case lower member 203B, the storage space 205 capable of storing the wire harness 202 and the protector 212 is defined in the storage case 203. FIG. 21 shows a perspective view of the case upper member 203A as viewed from below. In this case, the upper half of the guide wall 222 is provided in the case upper member 203A.

As shown in FIGS. 17 and 18, the protector 212, together with the wire harness 202, passes through the inlet hole 206 and enters the gap formed between the rail outer wall 15 and the rail inner wall 17. The protector 212 and the wire harness 202 extend forward through the gap and reach the vicinity of the slider 12. The protector 212 opens near the slider 12, and the wire harness 202 extends from the opening, passes under the rail inner wall 17, and extends to the slider 12. This allows the wire harness 202 and the protector 212 to be housed in the rail 11, thereby providing good protection for the wire harness 202 and the protector 212.

As shown in FIGS. 18 and 19, protrusions 224 protruding outward are provided on the outer surface of the protector 212. The protrusions 224 are provided on both the outer surface of the right wall 214 and the outer surface of the left wall 213 of the protector 212.

In this embodiment, the protrusions 224 may each consist of a rib extending in the extending direction of the protector 212 (i.e., the fore and aft direction). In this embodiment, the protrusions 224 are provided on the upper and lower edges of the right wall 214 so as to form ribs extending in the fore and aft direction. The protrusions 224 are also provided on the upper and lower edges of the left wall 213 so as to extend in the fore and aft directions. Further, two more protrusions 224 are arranged approximately vertically centrally on the left wall 213 and are each provided to form a ridge extending in the fore and aft direction.

These protrusions 224 (ribs) reduce the contact area between the protector 212 and the rail outer wall 15 and the contact area between the protector 212 and the rail inner wall 17 so that the sliding resistance when the protector 212 slides inside the rail 11 is reduced. In addition, since the protrusions 224 are formed so as to extend in the extending direction of the protector 212, the contact area between the protector 212 and the rail inner wall 17 can be more reliably reduced.

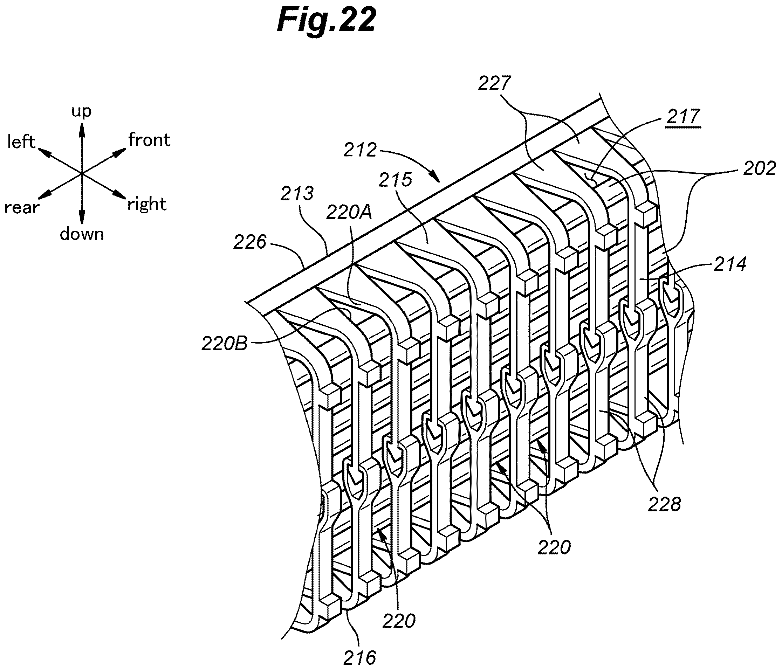

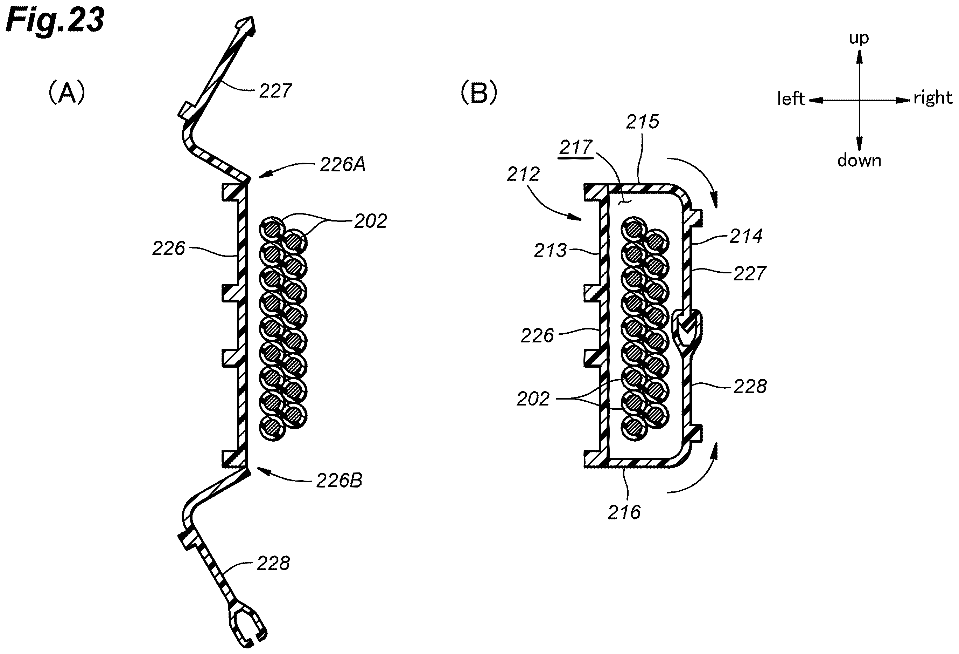

FIGS. 22 and 23 show a protector 212 according to a second embodiment of the present invention. As shown in FIG. 22, the protector 212 of the second embodiment is a resin member similar to that of the first embodiment, and has a left wall 213, a right wall 214, an upper wall 215, and a lower wall 216, and is formed in a substantially rectangular tubular shape defining an inner chamber 217 therein for accommodating the wire harness 202 therein.

The protector 212 of the second embodiment includes a plate-shaped main part 226 having a laterally facing surface, an upper connection part 227 connected to the upper end of the main part 226, and a lower connection part 228 connected to the lower end of the main part 226. The main part 226 constitutes the left wall 213 of the protector 212, the upper connection part 227 constitutes the upper wall 215 and the upper half of the right wall 214, and the lower connection part 228 constitutes the lower wall 216 and the lower half of the right wall 214.

As shown in FIG. 23(A), the upper connection part 227 is hinged at one end to the upper end of the main part 226 via a hinge part 226A. As a result, the upper connection part 227 is rotatably connected at one end to the upper end of the main part 226 around an axis extending in the fore and aft direction. The lower connection part 228 is hinged at one end to the lower end of the main part 226 via a hinge part 226B. As a result, the lower connection part 228 is rotatably connected at one end to the lower end of the main part 226 around an axis extending in the fore and aft direction (see the arrows in FIG. 23(B)). The upper connection part 227 and the lower connection part 228 are configured to be connectable to each other at the other ends thereof. By connecting the upper connection part 227 and the lower connection part 228 to each other, an inner chamber 217 that accommodates the wire harness 202 is defined as shown in FIG. 23(B).

In this manner, the protector 212 of the second embodiment can easily define the inner chamber 217 that accommodates the wire harness 202. Furthermore, the protector 212 of the second embodiment can easily accommodate the wire harness 202 in the inner chamber 217 by connecting the upper connection part 227 and the lower connection part 228 to each other.

As shown in FIGS.16 and 17, one end of the protector 212 is connected to the slider 12 via a connecting member 240. The configuration of the connecting member 240 will be described later. The other end of the protector 212 may be connected to the connector 211 provided on the wire harness 202.

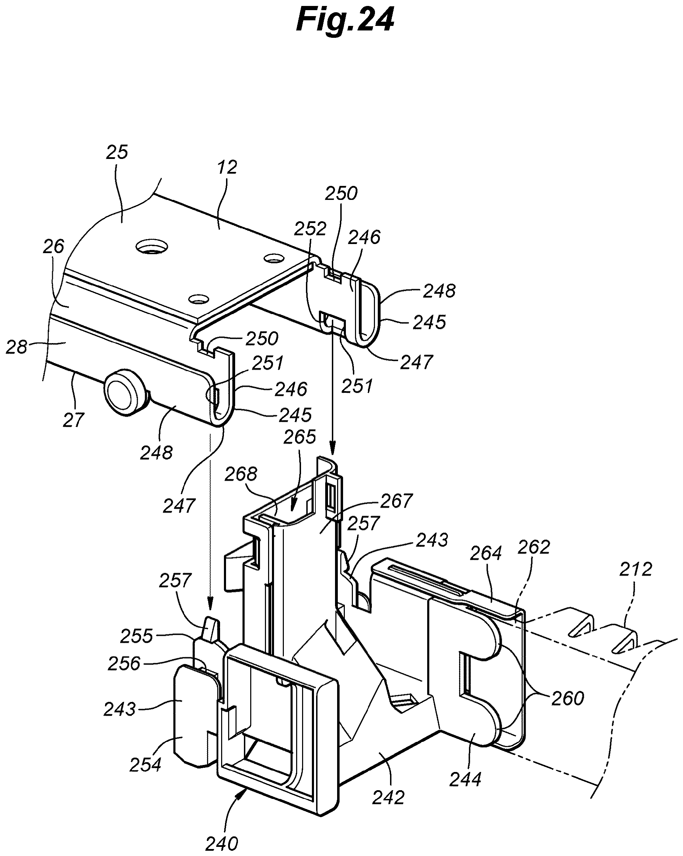

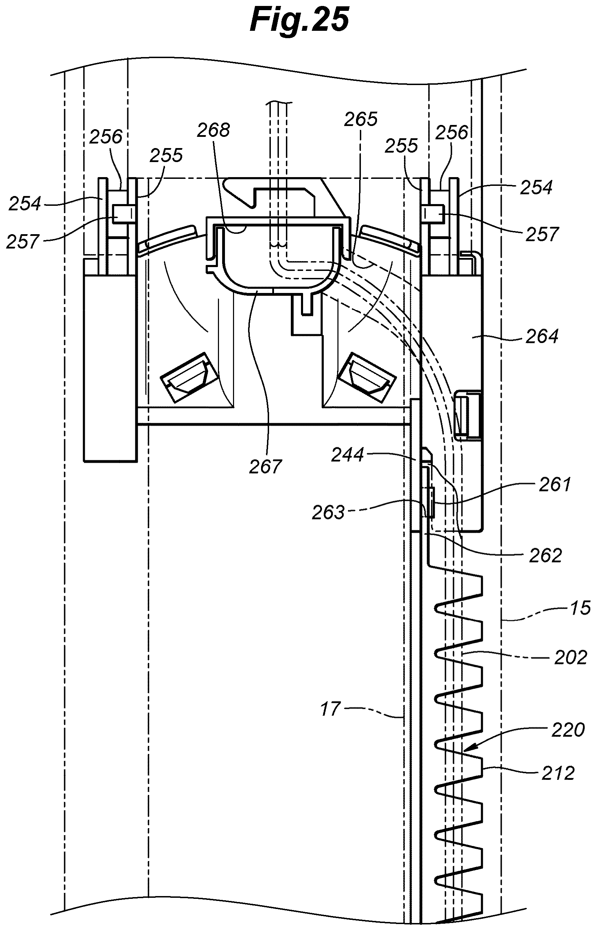

As shown in FIGS. 24 and 25, the connecting member 240 includes a base 242 positioned behind the base portion 25 of the slider 12, slider engagement portions 243 provided at the front side edges of the base 242, and a protector connecting portion 244 provided at the rear right edge of the base 242.

A pair of extensions 245 are provided on either side of the rear end of the slider 12. Each extension 245 is formed by the rear end parts of the slider inner wall 26, the slider lower wall 27, and the slider outer wall 28 extending rearward. The part of the extension 245 that continues from the slider inner wall 26 is referred to as an extension inner wall 246, the part of the extension 245 that continues from the slider lower wall 27 is referred to as an extension lower wall 247, the part of the extension that continues from the slider outer wall 28 is referred to as an extension outer wall 248.

The upper edge of each extension inner wall 246 is provided with an upper notch portion 250 that is recessed or cut downward. The extension lower wall 247 is provided with a receiving hole 251 that is passed through in the vertical direction. The receiving hole 251 extends to the lower edge of the extension inner wall 246, and the lower edge of the extension inner wall 246 is formed with a lower notch portion 252 that is recessed or cut upward.

As shown in FIG. 24, the slider engagement portion 243 is connected to the extension 245 by fitting a part of the slider engagement portion 243 into the receiving hole 251 (see the arrows in FIG. 24). The slider engagement portion 243 includes an outer wall portion 254 positioned between the extension inner wall 246 and the extension outer wall 248, an inner wall portion 255 positioned inside the extension inner wall 246, and a lateral connecting portion 256 connecting the inner wall portion 255 and the outer wall portion 254 to each other.

A hook claw 257 is provided at the upper end of the inner wall portion 255 and hooked into the upper notch portion 250. The lateral connecting portion 256 is inserted into the lower notch portion 252, and the hook claw 257 is hooked into the upper notch portion 250 so that the extension inner wall 246 is sandwiched between the hook claw 257 and the lateral connecting portion 256. This connects the slider engagement portion 243 and the extension 245 to each other and connects the connecting member 240 to the rear portion of the slider 12. Since the outer wall portion 254 restricts the lateral movement of the extension inner wall 246 and the extension outer wall 248, it is possible to suppress a lateral misalignment between the connecting member 240 and the rear part of the slider 12.

The protector connecting portion 244 includes an upper and a lower protruding piece 260 extending rearward. The protruding pieces 260 are plate-shaped with surfaces facing laterally. As shown in FIG. 25, the protruding pieces 260 are each provided with an engaging protrusion 261 protruding laterally. An extending piece 262 extending forward is provided on the front edge of the protector 212. The extending piece 262 is plate-shaped with surfaces facing laterally, and a pair of engaging holes 263 for receiving the engaging protrusions 261 are provided on the extending piece 262. The diameter of the engaging holes 263 is approximately equal to the diameter of the engaging protrusions 261, and the engaging protrusions 261 are received in the corresponding engaging holes 263, thereby connecting the protruding pieces 260 and the extending piece 262. As a result, the connecting member 240 is connected to the front edge of the protector 212.

As shown in FIGS. 24 and 25, the protector connecting portion 244 is provided with a protective member 264 that covers the protruding pieces 260 from the right side. The protective member 264 covers the joint portion between the protruding pieces 260 and the extending piece 262 and prevents the connecting member 240 and the protector 212 from being separated. As shown in FIG. 25, the connecting member 240 is joined between the front edge of the protector 212 and the rail outer wall 15 and rail inner wall 17.

The base 242 is provided with a through hole 265 through which the wire harness 202 is passed. As shown in FIG. 25, the through hole 265 opens in front of the protector connecting portions 244 and extends toward a laterally central part of the base 242. The through hole 265 then extends upward, reaches the upper surface of the base 242, and opens at the upper surface of the base 242 (the side surface on side of the seat main body 7).

As shown in FIG. 24, a tubular portion 267 extending upward is connected to the opening of the through hole 265 provided on the upper surface of the base 242. An inner hole 268 is formed in the tubular portion 267 so as to penetrate therethrough in the vertical direction, and the inner hole 268 is in communication with the through hole 265.

As shown in FIG. 17, the wire harness 202 extends forward from the front edge of the protector 212, enters the through hole 265, and then passes through the inner hole 268 of the tubular portion 267 to reach above the base 242. The wire harness 202 is thus guided by the tubular portion 267 so as to extend upward (i.e., toward the seat main body 7).

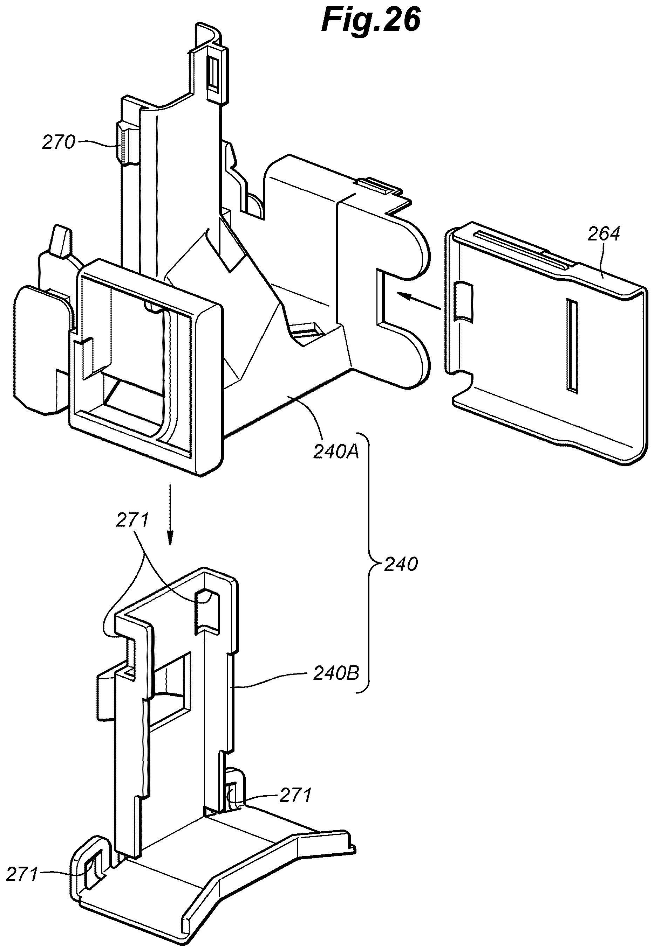

In this embodiment, as shown in FIG. 26, the connecting member 240 is composed of a first connecting member 240A and a second connecting member 240B. The first connecting member 240A constitutes the upper half of the base 242, the rear half of the tubular portion 267, the slider engagement portion 243, and the protector connecting portion 244. The second connecting member 240B constitutes the lower half of the base 242 and the front half of the tubular portion 267. A lock claw 270 is provided on one of the first connecting member 240A and the second connecting member 240B, and a lock hole 271 to which the lock claw 270 is engaged is provided on the other. By engaging the lock claw 270 with the lock hole 271, the first connecting member 240A and the second connecting member 240B are connected to each other.

By joining the first connecting member 240A and the second connecting member 240B to each other, a through hole 265 is formed between them. Furthermore, the rear half of a tubular portion 267 provided on the first connecting member 240A and the front half of a tubular portion 267 provided on the second connecting member 240B are joined to each other to form the tubular portion 267. The protective member 264 is attached to the side of the first connecting member 240A.

Next, when manufacturing the electric slide rail device 1, the worker first assembles the wire managing device 201. The worker first passes the wire harness 202 through the protector 212 and then assembles the connecting member 240 to the protector 212. The worker then places the protector 212 along the guide wall 222 provided on the case upper member 203A and connects the case upper member 203A and the case lower member 203B to each other. As a result, the protector 212 and a part of the wire harness 202 are stored inside the storage case 203. The worker then assembles the extension member 208 to the storage case 203, and the assembly of the wire managing device 201 is completed.

The worker fixes a rail device 275, which includes the rail 11 and the slider 12 connected thereto in a slidable manner, to the floor 3. After that, the worker connects the end of the wire harness 202, which has already been inserted into the protector 212, to the connecting member 210, and inserts the protector 212 into the rail 11 while inserting the connecting member 210 into the outlet hole 207 of the storage case 203. By connecting the connecting member 210 to the outlet hole 207 of the storage case 203, the storage case 203 is fixed to the floor 3. At this time, the worker may fix the storage case 203 and the extension member 208 to the floor 3 with bolts or the like. Next, the worker adjusts the position of the slider 12 and connects the connecting member 240 to the slider 12, thereby completing the manufacture of the electric slide rail device 1.

Next, the mode of operation of the electric slide rail device 1 in extending and retracting the wire harness 202 and the effect of the electric slide rail device 1 will be discussed in the following.

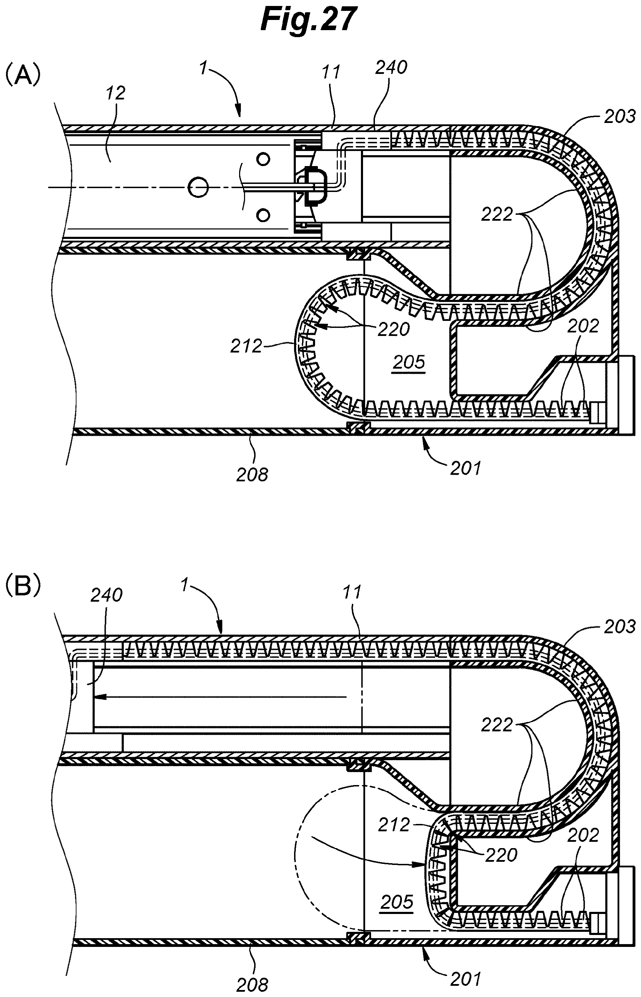

As shown by the arrow in FIG. 27(A), when the slider 12 moves forward relative to the rail 11 and displaces from the position shown in FIG. 27(A) to the position shown in FIG. 27(B), the wire harness 202 and protector 212 pass through the inlet hole 206 and are sent out forward.

This shortens the length of the portion of the wire harness 202 and the protector 212 that is housed in the storage case 203 and the extension member 208. Therefore, as shown by the arrows in FIG. 27(B), the protector 212 moves in such a manner that the bending radius of the wire harness 202 and the protector 212 becomes smaller.

When the slider 12 moves backward relative to the rail 11, or when the slider 12 is displaced from the position shown in FIG. 27(B) to the position shown in FIG. 27(A), the protector 212, and the wire harness 202 are pushed backward by the slider 12. As a result, the protector 212 and the wire harness 202 pass through the inlet hole 206 and are pushed into the storage case 203.

As a result, the length of the part of the protector 212 and the wire harness 202 stored in the storage case 203 and the extension member 208 increases. At this time, the protector 212 is guided by the guide wall 222 and moves in the direction opposite to the direction of the arrows in FIG. 27(B), and the wire harness 202 and the protector 212 are deformed so that their bending radius increases. As a result, the length of the part of the wire harness 202 stored in the storage case 203 and the extension member 208 increases, and the wire harness 202 is stored in the storage case 203 and the extension member 208 from the inlet hole 206.

In this manner, the wire harness 202 and the protector 212 are inserted into and paid out from the storage case 203 through the inlet hole 206. The retraction and deployment movements of the wire harness 202 and the protector 212 resulting from the movement of the slider 12 cause the bending radius of the part of the wire harness 202 and the protector 212 stored inside the storage case 203 and the extension member 208 changes. At this time, it is possible that the bending radius of the wire harness 202 becomes so small that an excessive load may be applied to the wire harness 202.

However, as shown in FIGS. 20(A) and 20(B), the bending radius when the protector 212 is bent to one side of the extending direction (the right side in FIG. 20(A)) is limited to be equal to or larger than a predetermined threshold value Rth. Therefore, as shown in FIG. 20(B), when the protector 212 is bent to the one side of the extending direction, the bending radius of the wire harness 202 is prevented from becoming excessively small so that the load that may be applied to the wire harness 202 can be limited.

The present invention has been described in terms of specific embodiments but is not limited by such embodiments, and can be modified in a wide range of ways.

The above-described embodiment was directed to an example in which the wire managing device 201 is provided on an electric slide rail device 1, but the wire managing device 201 may also be provided on a slide rail device that is manually slid by a seated occupant.

In the above embodiment, the seat main body 7 was the second structure, and the electric equipment was provided on the seat main body 7, but the present invention is not limited to this example. For example, the slider 12 may be the second structure, and the electric equipment may be the electric motor 36 for sliding the slider 12 relative to the rail 11. Alternatively, the first structure may be a fixed base, the second structure may be a work holder, and the electric equipment may be various actuators provided on the work holder.

In the above embodiment, a pair of rail inner walls 17 were placed between a pair of rail outer walls 15 that define the left and right sides of the rail 11 so as to laterally divide the space defined between the rail outer walls 15 into three parts, and the wire harness 202 and the protector 212 were disposed so as to pass through the part of the gap located on the right side. However, the wire harness 202 and the protector 212 may also be disposed so as to pass through the part of the space located on the left side.

**LIST OF REFERENCE NUMERALS**

| | | | |
|---|---|---|---|
| 1: | electric slide rail device | 2: | vehicle seat |
| 3: | floor | 5: | seat cushion |
| 6: | seat back | 11: | rail |
| 12: | slider | 17: | rail inner wall |
| 17L: | rail inner wall | 17R: | rail inner wall |
| 35: | screw assembly | 36: | electric motor |
| 38: | first screw member | 38A: | thread |
| 38E: | front side | 38F: | rear side |
| 39: | second screw member | 39A: | thread |
| 39B: | second gear | 39E: | front side |
| 39F: | rear side | 57: | first screw engagement portion |
| 58: | second screw engagement portion | 59: | engagement hole |
| 59L: | engagement hole | 59R: | engagement hole |
| 61: | first portion | 62A: | second portion |
| 62B: | second portion | 65: | edge portion |
| 65A: | step | 65B: | step |
| 65C: | upper front edge | 65D: | lower front edge |
| 65E: | upper rear edge | 65F: | lower rear edge |
| 65G: | upper end edge | 65H: | lower end edge |
| 71: | first portion | 72A: | second portion |
| 72B: | second part | 75: | edge portion |
| 75A: | step | 75B: | step |
| 75C: | upper front edge | 75D: | lower front edge |
| 75E: | upper rear edge | 75F: | lower rear edge |
| 75G: | upper end edge | 75H: | lower end edge |

## Claims

1. An electric slide rail device, comprising:
a rail having a channel cross section and extending along a first direction;
a slider that is received in the rail and slidably engages with the rail;
a screw assembly including a screw member supported on the slider so as to be rotatable about the first direction;
an electric motor that is supported on the slider and configured to rotate the screw member; and
a screw engagement portion that is formed on the rail so as to extend in the first direction and engage with the screw member,
the rail having a pair of side walls that oppose each other,
wherein the screw engagement portion includes a plurality of engagement holes formed in each side wall and arranged in the first direction, each engagement hole extending at an angle with respect to a second direction perpendicular to the first direction, and
wherein each engagement hole includes a first portion located in a longitudinally central part thereof and a pair of second portions located on either side of the first portion, the width of the second portion in the first direction being smaller than the width of the first portion in the first direction such that the screw member does not abut against an edge portion of the engagement hole in the first portion, and abuts against the edge portion of the engagement hole in at least one of the second portions.

2. The electric slide rail device according to claim 1, wherein the screw member abuts against the edge portion in one of the second portions.

3. The electric slide rail device according to claim 2, wherein the screw member abuts against the edge portion in one of the second portions in one side of the first direction.

4. The electric slide rail device according to claim 1, wherein the edge portion of the engagement hole includes a step formed at a boundary between the first portion and the second portion.

5. The electric slide rail device according to claim 1, wherein a gap is defined between the screw member and an end edge portion that forms an end portion of the second portion of the edge portion in the second direction.

6. The electric slide rail device according to claim 5, wherein the end edge portion extends parallel to the first direction.

7. The electric slide rail device according to claim 1, wherein the side walls are respectively provided with protrusion that protrude toward each other and extend in the first direction, and the engagement holes are passed through the protrusions in the second direction.

8. The electric slide rail device according to claim 1, wherein one of the second portions is offset in the first direction relative to the other second portion.

9. The electric slide rail device according to claim 1, wherein the second portions have a same length in the second direction.

10. A vehicle seat having the electric slide rail device according to any one of claims 1 to 7, wherein the rail is connected to a floor of a vehicle and the slider is connected to a seat cushion.

11. A manufacturing method for an electric slide rail device,
wherein the electric slide rail device comprises:
a rail having a channel cross section and extending along a first direction;
a slider that is received in the rail and slidably engages with the rail;
a screw assembly including a screw member supported on the slider so as to be rotatable about the first direction;
an electric motor that is supported on the slider and configured to rotate the screw member; and
a screw engagement portion that is formed on the rail so as to extend in the first direction and engage with the screw member,
the rail having a pair of side walls that oppose each other,
wherein the screw engagement portion includes a plurality of engagement holes formed in each side wall and arranged in the first direction, each engagement hole extending at an angle with respect to a second direction perpendicular to the first direction, and
wherein each engagement hole includes a first portion located in a longitudinally central part thereof and a pair of second portions located on either side of the first portion, the width of the second portion in the first direction being smaller than the width of the first portion in the first direction such that the screw member does not abut against an edge portion of the engagement hole in the first portion, and abuts against the edge portion of the engagement hole in at least one of the second portions,
the manufacturing method comprising the steps of
forming the engagement holes in the rail,
assembling the screw assembly and the electric motor to the slider, and
assembling the slider, with the screw assembly and the electric motor assembled thereto, to the rail.
